# EUROPÄISCHE PATENTSCHRIFT

(11) **EP 3 328 670 B1**
(45) Veröffentlichungstag und Bekanntmachung des Hinweises auf die Patenterteilung: **03.04.2019**
(21) Anmeldenummer: 16741031.5
(22) Anmeldetag: 20.07.2016
(51) Int. Cl.: B60H 1/34

(54) **BELÜFTUNGSEINRICHTUNG**
VENTILATION DEVICE
DISPOSITIF DE VENTILATION

(30) Priorität: 30.07.2015 DE 102015112572; 30.07.2015 DE 102015112571
(43) Veröffentlichungstag der Anmeldung: 06.06.2018
(73) Patentinhaber: Dr. Schneider Kunststoffwerke GmbH, 96317 Kronach (DE)
(72) Erfinder: SCHNEIDER, Johannes, 96328 Küps (DE)
(86) Internationale Anmeldenummer: PCT/EP2016/067304
(87) Internationale Veröffentlichungsnummer: WO 2017/016956

(56) Entgegenhaltungen:
- WO-A2-02/02361
- JP-A- 2001 138 727
- JP-A- 2002 103 951
- US-B1- 6 209 404

## Beschreibung

Es wird eine Belüftungseinrichtung mit mindestens einer Ausströmeinheit beschrieben, die in einer Aufnahme eines Verkleidungsteils eines Kraftfahrzeugs verschiebbar gelagert ist. Eine derartige Belüftungseinrichtung ist an einem Fahrzeugarmaturenbrett angeordnet und so in dem Fahrzeugarmaturenbrett gelagert, dass die Ausströmeinheit in einem aktiven Zustand eine Luftzufuhr in einen Fahrzeuginnenraum ermöglicht und in einem passiven Zustand zumindest abschnittsweise in der Aufnahme des Fahrzeugarmaturenbretts aufgenommen ist.

Aus dem Stand der Technik sind verschiedene Belüftungseinrichtungen bekannt, die eine Ausströmeinheit im passiven Zustand verdecken. Eine derartige Belüftungsanordnung für Kraftfahrzeuge ist aus DE 10 2011 100 059 A1 bekannt. Die Belüftungsanordnung umfasst eine Konsole mit einer Konsolenoberfläche in der eine Aufnahme ausgebildet ist. Die Konsole kann beispielsweise an dem Fahrzeugarmaturenbrett eines Fahrzeugs angeordnet sein.

Ferner umfasst die Belüftungsanordnung einen an der Konsole bewegbar gelagerten Luftausströmer, der in eine Öffnungs- und Schließstellung bewegt werden kann, wobei der Luftausströmer in Öffnungsstellung aus der Aufnahme ragt und in Schließstellung in der Aufnahme zumindest teilweise versenkt ist. Der Luftausströmer ist zum Verbringen von der Öffnungsin die Schließstellung und umgekehrt verschwenkbar um eine parallel zur Luftaustrittsfläche verlaufende Schwenkachse in der Aufnahme gelagert.

Die Belüftungsanordnung von DE 10 2011 100 059 A1 benötigt eine relativ große Schwenkfläche an einem Fahrzeugarmaturenbrett. Das bedeutet, dass an dem Fahrzeugarmaturenbrett eine größere Fläche zum Verschwenken für den Luftausströmer erforderlich ist, als die tatsächliche Nutzfläche, d. h. Ausströmfläche bzw. Ausströmöffnung des Luftausströmers. Zumindest ein Bereich des Fahrzeugarmaturenbretts muss für den Luftausströmer vorgehalten werden, wobei ein Großteil dieser Fläche nicht zum Ausströmen der Luft verwendet wird. Darüber hinaus verändert sich das Erscheinungsbild des Armaturenbretts in der Öffnungs- und Schließstellung erheblich.

Aus der DE 41 36 822 A1 ist eine Luftausströmvorrichtung für den Innenraum von Kraftfahrzeugen offenbart. Diese Luftausströmvorrichtung ist mit einer im Endabschnitt einer Luftführung vorgesehenen, zur Steuerung der Ausströmrichtung des Luftstromes bewegbar angeordneten Belüftungdüse und einer dieser stromab zugeordneten Blende, mit über Stege getrennten, schlitzartigen Ausströmöffnungen, ausgestattet. Die Luftleitelemente der Belüftungsdüse fluchten in einer gewählten Ausströmrichtung mit den Stegen. Die Luftleitelemente sind an einer um eine Drehachse bewegbaren Belüftungsdüse angeordnet und die Belüftungsdüse steht derart mit einem Schrittgetriebe einer Betätigungseinrichtung in Antriebsverbindung, dass in jeder gewählten Ausströmrichtung die Luftleitelemente mit benachbarten Stegen der Blende fluchten.

DE 601 21 969 T2 offenbart eine Luftleitungsdüse mit einer Öffnungs-/Schließbaugruppe und einem Lüftungsklappensatz, die gemeinsam bewegbar sind. Der Lüftungsklappensatz ist beweglich in einem Gehäusekanal und die Öffnungs-/Schließbaugruppe ist beweglich an dem Gehäuse montiert und zwischen einer geschlossenen Position und einer offenen Position beweglich. Eine Öffnungs-/Schließklappe der Öffnungs-/Schließbaugruppe weist eine Außenfläche und ein Paar Seitenteile auf, wobei jedes Seitenteil einen darin ausgebildeten bogenförmigen Schlitz aufweist, in den ein jeweiliger Führungsstift eingreift, der in Verbindung mit dem Gehäuse beweglich ist. Eine Bewegung der Führungsstifte bewirkt eine Bewegung der Öffnungs-/Schließbaugruppe zwischen der offenen und der geschlossenen Position, die wiederum eine Bewegung des Lüftungsklappensatzes zwischen der ausgefahrenen und der zurückgezogenen Position bewirkt. Eine solche Anordnung birgt jedoch das Risiko des Verklemmens, wenn bspw. Verunreinigungen in den bogenförmigen Schlitz gelangen.

Weiterhin offenbart WO 02/02361 A2 eine Belüftungseinrichtung aufweisend eine Ausströmeinheit, die in einer Aufnahme eines Verkleidungsteils eines Kraftfahrzeugs verschiebbar gelagert ist, und eine Verschlusseinheit, die verschwenkbar an der Aufnahme gelagert ist, wobei die Aufnahme mindestens eine erste Führung aufweist, entlang der die Ausströmeinheit verschiebbar gelagert ist.

Es ist daher Aufgabe, eine Belüftungseinrichtung mit einer Ausströmeinheit anzugeben, welche im aktiven Zustand (Öffnungsstellung), wenn über die Ausströmeinheit Luft in einen Fahrgastraum geführt wird, und im passiven Zustand (Schließstellung), wenn über die Ausströmeinheit keine Luft in den Fahrgastraum geführt wird, eine im Wesentlichen homogene Oberfläche am Armaturenbrett bzw. eines Bekleidungsteils eines Kraftfahrzeugs bereitstellt und kein Bauraum für die Belüftungseinrichtung verwendet wird, der sich über das Verkleidungsteil bzw. Armaturenbrett in den Fahrgastraum hinein erstreckt. Dabei soll über eine Öffnung eines Verkleidungsteils eines Kraftfahrzeugs im aktiven Zustand die Luft ausströmen und die Öffnung im passiven Zustand verdeckt sein.

Die Aufgabe wird durch eine Belüftungseinrichtung mit den in Anspruch 1 angegebenen technischen Merkmalen gelöst. Vorteilhafte Weiterbildungen sind in den Unteransprüchen im Detail angegeben.

Bei einer die vorstehend genannte Aufgabe lösenden Lüftungseinrichtung, mindestens aufweisend eine Ausströmeinheit, die in einer Aufnahme eines Verkleidungsteils eines Kraftfahrzeugs verschiebbar gelagert ist, und eine Verschlusseinheit, die verschwenkbar an der Aufnahme gelagert ist,
- weist die Aufnahme mindestens eine erste Führung auf, entlang der die Ausströmeinheit verschiebbar gelagert ist,
- sind an der Aufnahme ein erstes Antriebsrad, ein erstes Sternradelement und ein gegenüberliegendes zweites Sternradelement eines ersten Malteserkreuz-Getriebes angeordnet,
- verläuft die Rotationsachse des ersten Antriebsrads beabstandet zu den Rotationsachsen des ersten Sternradelements und des zweiten Sternradelements,
- ist das erste Antriebsrad mit einer Antriebseinheit gekoppelt,
- weisen das erste Antriebsrad an einer ersten Seite mindestens einen ersten Stift und das erste Sternradelement mindestens einen korrespondierenden ersten Aufnahmeschlitz auf,
- ist das erste Sternradelement mit der Verschlusseinheit gekoppelt und die Verschlusseinheit über das erste Sternradelement verschwenkbar,
- weisen das erste Antriebsrad an einer zweiten Seite mindestens einen zweiten Stift und das zweite Sternradelement mindestens einen korrespondierenden zweiten Aufnahmeschlitz auf,
- weist das zweite Sternradelement an einer dem zweiten Aufnahmeschlitz gegenüberliegenden Seite mindestens einen dritten Stift auf, der mit einem ersten Verbindungselement drehbar gekoppelt ist,
- weist das erste Verbindungselement einen Verbindungsabschnitt auf, der mit der Ausströmeinheit verdrehbar gekoppelt ist, und
- ist der Verbindungsabschnitt in einer zweiten Führung in der Aufnahme verschiebbar.

Unter einem Malteserkreuz-Getriebe versteht man im Allgemeinen ein Getriebe, welches ein Sternrad aufweist, das nach seinem charakteristischen, in der Form dem Malteserkreuz ähnlichen Bauteil benannt ist. Mit einem Malteserkreuz-Getriebe lassen sich kontinuierliche Drehbewegungen in intermittierende Drehbewegungen umwandeln oder die Zahl von Drehungen begrenzen. Klassische Sternräder weisen hierzu vier Schlitze auf. Darüber hinaus gibt es Sternräder bei Malteserkreuz-Getrieben, die mehr als vier Schlitze aufweisen. Zudem weist ein Malteserkreuz-Getriebe ein Antriebsrad auf, das mindestens einen Stift aufweist, der bei jeder Drehung in einen Schlitz des Sternrads eingreift und dieses so lange mitnimmt, bis der Stift wieder aus dem Schlitz austritt. Das Antriebsrad kann eine kreissektorförmige Sperrscheibe aufweisen, die nach dem Austritt des Stifts aus dem Schlitz des Sternrads in einem Bereich zwischen zwei Schlitzen oder einem Schlitz angrenzende Bereiche eingreift und das Malteserkreuz am Umfang festhält, sodass das Sternrad nicht weiter verdreht wird.

Die hierin beschriebene Belüftungseinrichtung weist demgegenüber ein Malteserkreuz-Getriebe auf, bei dem das Antriebsrad einen ersten Stift und einen auf einer gegenüberliegenden Seite liegenden zweiten Stift aufweist und ein erstes Sternradelement sowie ein zweites Sternradelement einen ersten Aufnahmeschlitz bzw. einen zweiten Aufnahmeschlitz aufweisen. Das erste Sternradelement und das zweite Sternradelement müssen dabei nicht rotationssymmetrisch ausgebildet sein. Die Anordnung und Ausbildung der Komponenten der Belüftungseinrichtung ermöglicht ein Öffnen der Verschlusseinheit und ein Verfahren der Ausströmeinheit durch Rotation des ersten Antriebsrads in einer ersten Drehrichtung. Zum Zurückfahren der Ausströmeinheit und zum Verschließen einer Öffnung des Verkleidungsteils durch die Verschlusseinheit muss das erste Antriebsrad nur in einer zweiten Drehrichtung gedreht werden. Die Anordnung des ersten Stifts und des zweiten Stifts an dem Antriebsrad gibt dabei vor, in welchem Abstand zueinander die verschiedenen Bewegungen, d. h. das Verschwenken der Verschlusseinheit und das Verfahren der Ausströmeinheit, erfolgen. So kann beispielsweise schon beim Verschwenken der Verschlusseinheit ein Verfahren der Ausströmeinheit aus einer zurückgefahrenen Position in eine vorgefahrene Position erfolgen. Hierzu ist der Abstand zwischen dem ersten Stift und dem zweiten Stift geringer als bei Ausführungen, in denen zuerst die Verschlusseinheit vollständig geöffnet und anschließend die Ausströmeinheit aus einer zurückgefahrenen Position in eine vorgefahrene Position bewegt wird. Das Verfahren der Ausströmeinheit und das Öffnung und Schließen über die Verschlusseinheit beim Zurückfahren der Ausströmeinheit können daher derart erfolgen, dass die beiden Bewegungsabläufe sich überlagern oder nachfolgend ausgeführt werden.

Die Ausbildung der Belüftungseinrichtung ermöglicht ein Verfahren der Ausströmeinheit und ein Verschwenken der Verschlusseinheit in eine Öffnungsstellung durch Rotation des ersten Antriebsrads in einer ersten Richtung und in eine Schließstellung durch Rotation des ersten Antriebsrads in einer zweiten Richtung, wobei die zweite Richtung entgegengesetzt zur ersten Richtung gerichtet ist. Dadurch kann auf mehrere Antriebeinheiten oder voneinander getrennte Antriebe verzichtet werden. Die Anordnung ermöglicht dabei, dass in der Öffnungsstellung die Ausströmeinheit die Luftzufuhr eines Luftstroms in den Fahrgastraum bereitstellt, wobei im Wesentlichen nur die Ausströmöffnung der Ausströmeinheit sichtbar ist. In der Schließstellung wird eine Öffnung an dem Verkleidungsteil durch die Verschlusseinheit verschlossen. Die Verschlusseinheit kann dabei so ausgebildet sein, dass sie sich nahtlos in das äußere Erscheinungsbild des Verkleidungsteils einfügt. Auch die Austrittsöffnung der Ausströmeinheit schließt in einer Öffnungsstellung im Wesentlichen bündig mit der Oberfläche des Verkleidungsteils des Kraftfahrzeugs ab. Die Belüftungseinrichtung ermöglicht dabei das Bereitstellen eines Luftstroms über eine Ausströmeinheit, wobei keine weiteren Flächen des Verkleidungsteils für das Verschwenken der Verschlusseinheit und das Verfahren der Ausströmeinheit benötigt werden.

Zudem können zwei verschiedene Bewegungen von verschiedenen Komponenten über einen einzigen Antrieb realisiert werden, der zum Verbringen in die Öffnungsstellung und zum Verbringen in die Schließstellung jeweils nur in eine Richtung eine Rotation des Antriebsrads bereitstellt.

Die Belüftungseinrichtung kann ferner so ausgebildet sein, dass
- an der Aufnahme ein zweites Antriebsrad, ein erstes Sternradelement und ein gegenüberliegendes zweites Sternradelement eines zweiten Malteserkreuz-Getriebes angeordnet sind,
- die Rotationsachse des zweiten Antriebsrads beabstandet zu den Rotationsachsen des ersten Sternradelementes und des zweiten Sternradelementes verläuft,
- das zweite Antriebsrad mit einer Antriebseinheit gekoppelt ist,
- das zweite Antriebsrad an einer ersten Seite mindestens einen ersten Stift und das erste Sternradelement mindestens einen korrespondierenden Aufnahmeschlitz aufweisen,
- das erste Sternradelement mit der Verschlusseinheit gekoppelt und die Verschlusseinheit über das erste Sternradelement verschwenkbar ist,
- das zweite Antriebsrad an einer zweiten Seite mindestens einen zweiten Stift und das zweite Sternradelement mindestens einen korrespondierenden zweiten Aufnahmeschlitz aufweisen,
- das zweite Sternradelement an einer dem zweiten Aufnahmeschlitz gegenüberliegenden Seite mindestens einen dritten Stift aufweist, der mit einem zweiten Verbindungselement drehbar gekoppelt ist,
- das zweite Verbindungselement einen Verbindungsabschnitt aufweist, der mit der Ausströmeinheit verdrehbar gekoppelt ist, und
- der Verbindungsabschnitt in einer zweiten Führung in der Aufnahme verschiebbar ist.

Eine Belüftungseinrichtung mit zwei derartigen Malteserkreuz-Getrieben, die an zwei gegenüberliegenden Seitenwänden der Aufnahme angeordnet sind, ermöglicht ein synchrones Verschwenken der Verschlusseinheit und ein synchrones Verfahren der Ausströmeinheit. In derartigen Ausführungen kann auch nur eine Antriebseinheit vorgesehen sein.

Das erste Antriebsrad kann mit dem zweiten Antriebsrad gekoppelt sein. Hierdurch ist es möglich, mit einer einzigen Antriebseinheit ein synchrones Verschwenken der Verschlusseinheit und ein synchrones Verfahren der Ausströmeinheit zu realisieren. Bei nur einer Antriebseinheit wird auch der für die Antriebseinheit benötigte Bauraum reduziert, da auf weitere Komponenten verzichtet werden kann. Das erste Antriebsrad und/oder das zweite Antriebsrad können über ein Getriebe mit der Antriebseinheit gekoppelt sein. Eine Getriebeanordnung stellt eine entsprechende Über- bzw. Untersetzung einer Drehbewegung bereit, welche über die Antriebseinheit auf das erste Antriebsrad und/oder auf das zweite Antriebsrad übertragen wird.

Die Aufnahme in dem Verkleidungsteil kann eine erste Öffnung für die Ausströmeinheit und mindestens eine zweite Öffnung aufweisen, die benachbart zur ersten Öffnung angeordnet ist. In einem der zweiten Öffnung zugeordneten Aufnahmeabschnitt der Aufnahme kann mindestens ein Luftleitelement verschwenkbar gelagert sein. Über das mindestens eine Luftleitelement in der zweiten Öffnung kann auch bei einer verschlossenen Belüftungseinrichtung eine Luftzufuhr bereitgestellt werden. Vorzugsweise erfolgt über die mindestens eine zweite Öffnung eine Luftzufuhr in eine bestimmte Richtung. So können beispielsweise Belüftungseinrichtungen, die im Bereich einer Seitenscheibe an einem Fahrzeugarmaturenbrett angeordnet sind, in der verschlossenen Stellung weiterhin einen Luftstrom zu der Seitenscheibe hin bereitstellen. Die Luftzufuhr zur Seitenscheibe kann sowohl im aktiven Zustand der Ausströmeinheit, als auch im passiven Zustand der Ausströmeinheit bereitgestellt werden. In weiteren Ausführungen ist es vorgesehen, dass der Luftstrom zur Seitenscheibe hin bei einer verschlossenen Ausströmeinheit über ein Verschwenken von Luftleitelementen bereitgestellt wird. Das Verschwenken der Luftleitelemente erfolgt dabei im Rahmen einer Zwangssteuerung. Das bedeutet, dass beim Verschließen oder im verschlossenen Zustand der Verschlusseinheit automatisch das mindestens eine Luftleitelement so verschwenkt wird, dass ein Luftstrom auf die Seitenscheibe bereitgestellt wird. Wird die Verschlusseinheit wieder nach oben verschwenkt und die Ausströmeinheit nach vorne verfahren, sodass über die Ausströmeinheit ein Luftstrom über die erste Öffnung bereitgestellt wird, kann über das Luftleitelement in der zweiten Öffnung ein gemeinsames Verschwenken mit Luftleitelementen der Ausströmeinheit erfolgen. Das bedeutet, dass im geöffneten Zustand die Zwangssteuerung aufgegeben werden kann und das mindestens eine Luftleitelement in der zweiten Öffnung beispielsweise synchron mit Luftleitelementen der Ausströmeinheit verschwenkt wird.

Die Ausströmeinheit kann verschwenkbar an einem Gehäuse der Ausströmeinheit gelagerte erste Luftleitelemente und verschwenkbar in dem Gehäuse gelagerte zweite Luftleitelemente aufweisen, die orthogonal zu den ersten Luftleitelementen gelagert sind, wobei das mindestens eine Luftleitelement mit den ersten Luftleitelementen und/oder den zweiten Luftleitelementen gekoppelt ist. Die ersten und zweiten Luftleitelemente in dem Gehäuse der Ausströmeinheit können Lamellen sein, die über ein Bedienelement verschwenkbar sind. Das Bedienelement kann beispielsweise auf einer horizontal verlaufenden Steuerlamelle angeordnet sein, wobei eine Bewegung des Bedienelementes nach oben und unten ein entsprechendes Verschwenken der horizontal verlaufenden Lamellen bewirkt. Das Bedienelement ist ferner mit vertikal angeordneten Lamellen gekoppelt, sodass ein Verschieben der Bedieneinheit entlang der horizontal verlaufenden Steuerlamelle ein Verschwenken der vertikal verlaufenden Lamellen bewirkt. In weiteren Ausführungsformen erstrecken sich beispielsweise die vertikal angeordneten Lamellen über das Gehäuse der Ausströmeinheit hinweg nach unten, sodass diese ebenso in einen Luftkanal ragen, der dem Aufnahmeabschnitt für das mindestens eine Luftleitelement zugeordnet ist. Der über die zweite Öffnung ausgegebene Luftstrom kann dann zusätzlich zu dem ersten Luftleitelement über die vertikal verlaufenden Lamellen gesteuert werden. Vorzugsweise werden die vertikal verlaufenden Lamellen beim Verschließen des Luftstroms über die Ausströmeinheit durch Verschwenken einer Verschlussklappe der Verschlusseinheit und Zurückfahren der Ausströmeinheit in eine Zwangsstellung verbracht. In dieser Zwangsstellung werden die Vertikallamellen so verschwenkt, dass sie bspw. den Luftstrom über die zweite Öffnung zu einer benachbart angeordneten Seitenscheibe hin lenken. In einer Ausführung ist das mindestens eine Luftleitelement, das in dem Aufnahmeabschnitt mit der zweiten Öffnung angeordnet ist, verschwenkbar mit den horizontal verlaufenden Lamellen gekoppelt. In einem geöffneten Zustand der Belüftungseinrichtung kann daher das mindestens eine Luftleitelement gemeinsam mit den horizontal verlaufenden Lamellen verschwenkt werden. Wird die Ausströmeinheit zurückgefahren und die Verschlusseinheit verschwenkt, erfolgt eine Entkopplung des mindestens einen Luftleitelements von den horizontal verlaufenden Lamellen, sodass das mindestens eine Luftleitelement automatisch eine bestimmte Zwangsstellung einnimmt. Wird die Ausströmeinheit wieder nach vorne verfahren, so wird das mindestens eine Luftleitelement über eine Koppelanordnung wieder mit den horizontal verlaufenden Lamellen derart gekoppelt, dass das mindestens eine Luftleitelement gemeinsam mit den horizontal verlaufenden Lamellen verschwenkbar ist und eine bestimmte Stellung der horizontal verlaufenden Lamellen einnimmt.

Die Aufnahme kann eine dritte Führungsanordnung aufweisen, über welche mittels einer Koppeleinrichtung, die mit dem mindestens einen Luftleitelement sowie den ersten Luftleitelementen und/oder den zweiten Luftleitelementen gekoppelt ist, die Ausrichtung der ersten Luftleitelemente und/oder der zweiten Luftleitelemente in einer zurückgefahrenen Position der Ausströmeinheit speicherbar ist, wobei ein Steuerglied in der zurückgefahrenen Position der Ausströmeinheit in der dritten Führungsanordnung aufgenommen ist. Die Koppeleinrichtung kann eine Koppelstange aufweisen, die mit den horizontal verlaufenden Lamellen verbundbar ist und über eine weitere Anordnung mit dem Luftleitelement verbunden ist. In einer vorgefahrenen Position der Ausströmeinheit, wobei ein Luftstrom über die Ausströmeinheit ausgegeben wird, erfolgt dabei ein synchrones Verschwenken des mindestens einen Luftleitelements mit den horizontal verlaufenden Lamellen. Wird die Ausströmeinheit zurückgefahren, so kann ein Pin oder Stift des mindestens einen Luftleitelements, der in einer Kulisse eines verschwenkbar und verlagerbar mit der Koppelstange verbundenen Verbindungsstücks geführt ist, aus einer ersten Position in eine Position verfahren werden. In der ersten Position, wobei sich die Ausströmeinheit in der vorgefahrenen Position befindet, erfolgt dabei das synchrone Verschwenken mit den horizontal verlaufenden Lamellen. In der zweiten Position, wobei sich die Ausströmeinheit in der zurückgefahrenen Position befindet, nimmt das mindestens eine Luftleitelement eine Zwangsstellung ein. Um die Ausrichtung der horizontal verlaufenden Lamellen - erste Luftleitelemente - zu speichern, weist beispielsweise die Koppelstange für die horizontal verlaufenden Lamellen ein als Stift ausgebildetes Steuerglied auf, das in verschiedene Führungen der dritten Führungsanordnung geschoben werden kann. Die Führungen sind so ausgebildet, dass in einer vorgefahrenen Position der Ausströmeinheit das Steuerglied frei bewegt werden kann und in einer zurückgefahrenen Position der Ausströmeinheit das Steuerglied in einer der Führungen der dritten Führungsanordnungen aufgenommen ist. Die zwischen den Führungen angeordneten Trennabschnitte können abgeschrägt ausgebildet sein, sodass das Steuerglied stets in eine Führung überführt und ein Blockieren verhindert wird.

In weiteren Ausführungen weist das Gehäuse eine vierte Führungsanordnung und eine erste Führungsöffnung, die Aufnahme eine erste Führungskulisse und eine Führungsöffnung auf, und an der Aufnahme ist drehbar ein Führungselement gelagert, welches eine zweite Führungskulisse und einen ersten Steuerstift aufweist, wobei ein erstes Luftleitelement oder ein zweites Luftleitelement einen zweiten Steuerstift aufweisen, der über die erste Führungsöffnung aus dem Gehäuse hervorsteht und an der ersten Führungskulisse und der zweiten Führungskulisse geführt ist. Der erste Steuerstift ist in der zweiten Führungsöffnung geführt und erstreckt sich in Richtung des Gehäuses, wobei der erste Steuerstift im zurückgefahrenen Zustand der Ausströmeinheit in einer Führungsbahn der vierten Führungsanordnung aufgenommen ist. Über die vierte Führungsanordnung am Gehäuse kann beispielsweise die Stellung der vertikal verlaufenden Lamellen in der zurückgefahrenen Position der Ausströmeinheit gespeichert werden, wobei in der zurückgefahrenen Position eine Zwangsstellung eingenommen wird. Die vorhin beschriebene Anordnung und Ausbildung ermöglicht die Speicherung der Stellung der vertikal verlaufenden Lamellen, wobei die vertikal verlaufenden Lamellen in der zurückgefahrenen Position dann eine andere Ausrichtung einnehmen. Die in der zurückgefahrenen Position eingenommene Ausrichtung ist über die Ausbildung der Führungskulissen vorgegeben. D. h. beim Zurückfahren der Ausströmeinheit werden die vertikal verlaufenden Lamellen in eine bestimmte Richtung verschwenkt. Beispielsweise werden die Vertikallamellen so verschwenkt, dass ein Luftstrom seitlich abgelenkt wird, beispielsweise zu einer Seitenscheibe. Wird die Ausströmeinheit wieder nach vorne verfahren, so erfolgt ein Verschwenken der vertikal verlaufenden Lamellen derart, dass sie die zuvor eingestellte Ausrichtung wieder einnehmen.

Die Rotationsachse des ersten Sternradelements und die Rotationsachse des zweiten Sternradelements können auf einer gemeinsamen Achse liegen. Ferner können der erste Stift und der zweite Stift des ersten Antriebsrads und/oder des zweiten Antriebsrads um deren Rotationsachse in einem Winkel zwischen 90 Grad und 150 Grad versetzt zueinander angeordnet sein. In einer derartigen Ausführung erfolgt das Verfahren und Öffnen bzw. Verschwenken der Verschlusseinheit zeitlich versetzt zueinander. Jedoch können auch bei geringeren Abweichungen die einzelnen Bewegungsabläufe zumindest teilweise überlappend erfolgen. Wichtig ist, dass ein Verfahren der Ausströmeinheit erst dann erfolgt, wenn die Verschlusseinheit derart verschwenkt worden ist, dass es zu keinem Blockieren kommt.

Die Antriebseinheit kann einen Elektromotor aufweisen. Der Elektromotor wird über eine Steuereinheit betrieben. Die Steuereinheit kann in unmittelbarer Nähe der Öffnung an dem Verkleidungsteil des Kraftfahrzeugs oder an einer entfernt gelegenen Stelle angeordnet sein. Die Steuereinheit kann zudem auch Teil einer Steuerung für weitere in einem Kraftfahrzeug angeordnete Komponenten sein, wie z. B. einer Klimaanlage.

Anstelle eines Elektromotors können auch mechanische Drehräder vorgesehen sein, die ein manuelles Verstellen bzw. Verfahren der Ausströmeinheit und Verschwenken der Verschlusseinheit ermöglichen. In weiteren Ausführungen sind das erste Antriebsrad und das zweite Antriebsrad über eine Zahnradanordnung und eine Welle miteinander gekoppelt. Das erste Antriebsrad und das zweite Antriebsrad sind dann mit der Antriebseinheit gekoppelt, wobei eine Übertragung der Drehbewegung auf das jeweils andere Antriebsrad erfolgt. Eine einzige Antriebseinheit reduziert die Kosten für die Belüftungseinheit und reduziert zudem das Gewicht der Belüftungseinrichtung. Zudem wird ein geringerer Platz für die Belüftungseinrichtung benötigt. Ferner ist die Ansteuerung von beispielsweise elektronischen Komponenten, insbesondere im Hinblick auf ein synchrones Verschwenken und Verfahren, einfacher zu realisieren, wenn nur eine einzige Antriebseinheit vorgesehen ist.

Die Aufnahme für die Belüftungseinrichtung kann selbst ein Gehäuse für die Komponenten für die Belüftungseinrichtung sein. In dem Gehäuse ist dann ein weiteres Gehäuse der Ausströmeinheit verschiebbar gelagert, wobei die Komponenten in den vorstehend beschriebenen Funktionsweisen miteinander agieren.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung einer Belüftungseinrichtung und eines Teils eines Verkleidungsteils eines Armaturenbretts;
- Fig. 2: eine perspektivische Rückansicht der Anordnung von Fig. 1;
- Fig. 3: eine Rückansicht von Komponenten der Anordnung von Fig. 1;
- Fig. 4: eine schematische Seitenansicht von Komponenten der Anordnung von Fig. 1;
- Fig. 5: eine perspektivische Darstellung von Komponenten der Anordnung von Fig. 1;
- Fig. 6: eine perspektivische Darstellung einer Verschlusseinheit der Belüftungseinheit von Fig. 1;
- Fig. 7: eine perspektivische Darstellung von Komponenten der Belüftungseinrichtung von Fig. 1;
- Fig. 8: eine weitere perspektivische Darstellung von Komponenten der Belüftungseinrichtung von Fig. 1;
- Fig. 9: eine weitere perspektivische Darstellung von Komponenten der Belüftungseinrichtung von Fig. 1;
- Fig. 10: eine noch weitere perspektivische Darstellung von Komponenten der Belüftungseinrichtung von Fig. 1;
- Fig. 11: eine perspektivische Darstellung einer Ausströmeinheit und eines Luftleitelements der Belüftungseinrichtung von Fig. 1;
- Fig. 12: eine Seitenansicht der Anordnung von Fig. 11;
- Fig. 13: eine schematische Schnittansicht von Komponenten der Belüftungseinrichtung und eines Teils eines Verkleidungsteils eines Armaturenbretts von Fig. 1;
- Fig. 14: eine schematische Draufsicht auf eine Ausströmeinheit der Belüftungseinrichtung von Fig. 1;
- Fig. 15: eine weitere schematische Draufsicht auf eine Ausströmeinheit der Belüftungseinrichtung von Fig. 1;
- Fig. 16: eine schematische Darstellung einer Vertikallamelle der Ausströmeinheit der Belüftungseinrichtung von Fig. 1;
- Fig. 17: eine vergrößerte Darstellung eines Bereichs mit einer vierten Führungsanordnung der Belüftungseinrichtung von Fig. 1;
- Fig. 18: eine vergrößerte Darstellung eines Bereichs mit einer vierten Führungsanordnung und einem Führungselement der Belüftungseinrichtung von Fig. 1;
- Fig. 19: eine schematische Schnittansicht der Ausströmeinheit der Belüftungseinrichtung von Fig. 1; und
- Fig. 20: eine perspektivische Darstellung von Vertikallamellen und Horizontallamellen der Ausströmeinheit der Belüftungseinrichtung von Fig. 1.

In den Figuren mit gleichen Bezugszeichen versehene Teile und Komponenten entsprechenden im Wesentlichen einander, sofern nichts anderes angegeben ist. Im Weiteren wird darauf verzichtet, Bestandteile und Komponenten zu beschreiben, welche nicht wesentlich für das Verständnis der hierin offenbarten technischen Lehre sind.

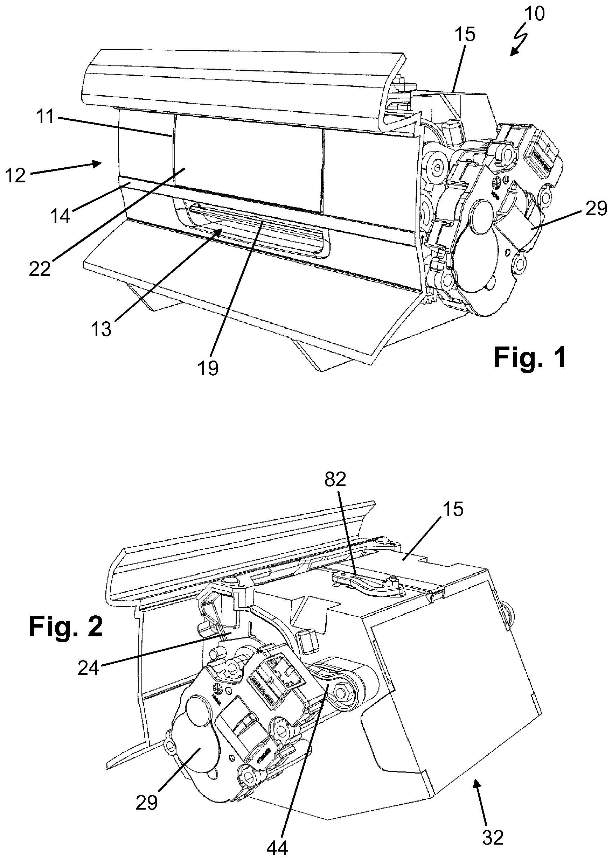

Die Fig. 1 bis 20 zeigen eine beispielhafte Ausführungsform für eine Belüftungseinrichtung 10, die an einem Verkleidungsteil 12 an einem Fahrzeugarmaturenbrett angeordnet ist und eine Ausströmeinheit 16 aufweist, die in einer Aufnahme 15 verschiebbar gelagert ist.

Die Belüftungseinrichtung 10 wird nachfolgend in Bezug auf die Figuren 1 bis 20 beschrieben.

Fig. 1 zeigt eine perspektivische Darstellung einer Belüftungseinrichtung 10 und eines Teils eines Verkleidungsteils 12 eines Fahrzeugarmaturenbretts. Das Verkleidungsteil 12 weist eine erste Öffnung 11 und eine zweite Öffnung 13 auf, die über eine Leiste 14 voneinander getrennt sind. In der Öffnung 13 ist ein Luftleitelement 19 verschwenkbar in einem Aufnahmeabschnitt der Aufnahme 15 gelagert. Fig. 1 zeigt den verschlossenen Zustand der ersten Öffnung 11. Die Öffnung 11 wird über eine Verschlusseinheit 22 verschlossen, die verschwenkbar in der Aufnahme 15 gelagert ist. Wie der Darstellung in Fig. 1 entnommen werden kann, schließt die vordere Oberfläche der Verschlusseinheit 22 im Wesentlichen bündig mit den benachbarten Bereichen des Verkleidungsteils 12 ab. Im verschlossenen Zustand der Belüftungseinrichtung 10 wird dadurch eine im Wesentlichen homogene Oberfläche über die Verschlusseinheit 22 bzw. die Öffnung 11 hinweg bereitgestellt. Die Öffnung 13 unterhalb der Leiste 14 wird nicht verschlossen. Über das Luftleitelement 19 und dahinter angeordnete und einer Ausströmeinheit 16 zugeordnete Vertikallamellen 20 erfolgt bei einer geschlossenen Öffnung 11 ein definiertes Ablenken eines Luftstroms beispielsweise nach links oder nach rechts. Der über die zweite Öffnung 13 austretende Luftstrom wird hierdurch zu einer Seitenscheibe geleitet. Beispielsweise ist eine Seitenscheibe im Wesentlichen direkt links neben dem Verkleidungsteil 12 angeordnet. Dabei werden die Vertikallamellen 20 so verschwenkt, dass der Luftstrom nach links abgelenkt wird. Wird die erste Öffnung 11 über die Verschlusseinheit 22 geöffnet, so nehmen die Vertikallamellen 20 und mit den Luftleitelement 19 gekoppelte Horizontallamellen 18 ihre ursprüngliche, vor dem Schließen der Öffnung 11 eingestellte Stellung wieder ein. Die automatische Ausrichtung in Richtung der Seitenscheibe wird aufgehoben und das Luftleitelement 19 synchron mit den Horizontallamellen 18 verschwenkt. Ebenso können die Vertikallamellen 20 in beliebiger Weise verstellt werden. Beim Verbringen der Ausströmeinheit 16 in eine vorgefahrene Position nehmen die Vertikallamellen 20 zuerst ihre ursprüngliche, vor dem Schließen, eingenommene Stellung ein.

Die Belüftungseinrichtung weist eine Antriebseinheit 29 mit einem Elektromotor auf. Über den Elektromotor wird das Verfahren der Ausströmeinheit 16 und das Verschwenken der Verschlusseinheit 22 durchgeführt. Der Elektromotor ist hierzu über eine nicht dargestellte Steuerung steuerbar.

Fig. 2 zeigt eine perspektivische Rückansicht der Anordnung von Fig. 1. Die Antriebseinheit 29 weist zudem eine Verbindungsstelle auf, in welche ein entsprechend ausgebildeter Stecker eingesetzt werden kann. Über diese Verbindung erfolgt die Stromzufuhr und Steuerung des Elektromotors der Antriebseinheit 29.

Fig. 2 zeigt ferner ein erstes Sternradelement 24, das mit der Verschlusseinheit 22 verbunden ist. Darüber hinaus sind ein erstes Verbindungselement 44 und ein Führungselement 82 dargestellt. Die Luftzufuhr zu der Belüftungseinrichtung 10 erfolgt über einen Anschluss 32, der an einem Luftzuführkanal angeschlossen ist. Die Luft kann von einer Klimaanlage oder einer anderen Belüftungsanordnung zugeführt werden.

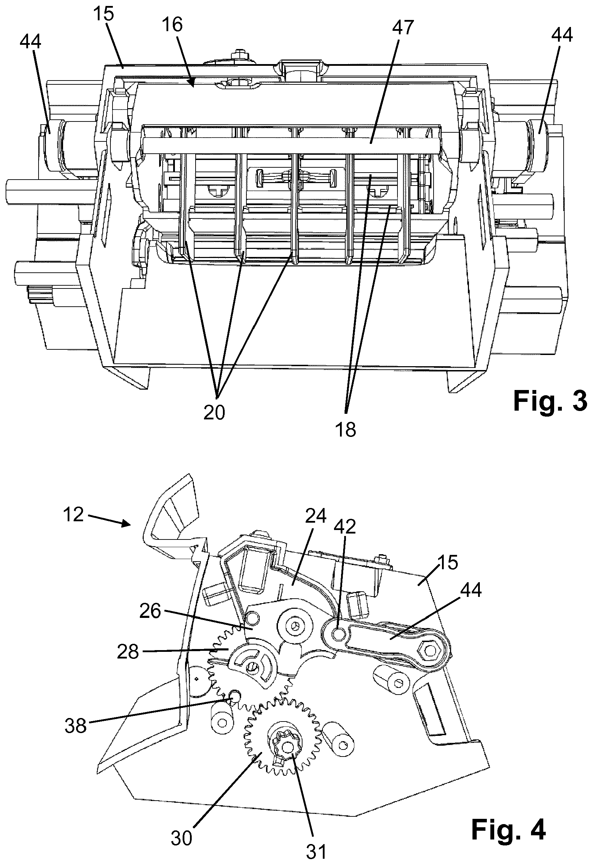

Fig. 3 zeigt eine Rückansicht von Komponenten der Anordnung von Fig. 1. In Fig. 3 ist eine hintere Abdeckung der Aufnahme 15 nicht dargestellt, sodass eine Darstellung von hinten auf die Ausströmeinheit 16 gezeigt ist. Fig. 3 zeigt die Anordnung der Horizontallamellen 18 und der Vertikallamellen 20. Zudem ist eine Welle 47 dargestellt, welche zwei Verbindungselemente 44 miteinander verbindet. Die Ausströmeinheit 16 ist über die ersten Verbindungselemente 44 entlang einer Führung 54 verschiebbar gelagert, wie nachfolgend näher erläutert.

Fig. 4 zeigt eine schematische Seitenansicht von Komponenten von Fig. 1. In Fig. 4 ist die Antriebseinheit 29 nicht dargestellt. An der Seitenwand der Aufnahme 15 ist ein Zahnrad 30 drehbar gelagert, das mit einem Ritzel 31 auf einer gemeinsamen Welle 33 gelagert ist. Über das Ritzel 31 wird die Drehbewegung des Elektromotors auf das Zahnrad 30 übertragen. Das Zahnrad 30 steht mit einem ersten Antriebsrad 28 in Eingriff, welches ebenfalls drehbar an der Aufnahme 15 gelagert ist. Das erste Antriebsrad 28 weist einen zweiten Stift 38 auf. An der Aufnahme 15 ist das erste Sternradelement 24 drehbar gelagert. Auf der Drehachse des ersten Sternradelements 24 ist ebenfalls ein zweites Sternradelement 26 drehbar gelagert. Das zweite Sternradelement 26 weist einen dritten Stift 42 auf, der mit dem ersten Verbindungselement 44 drehbar gekoppelt ist.

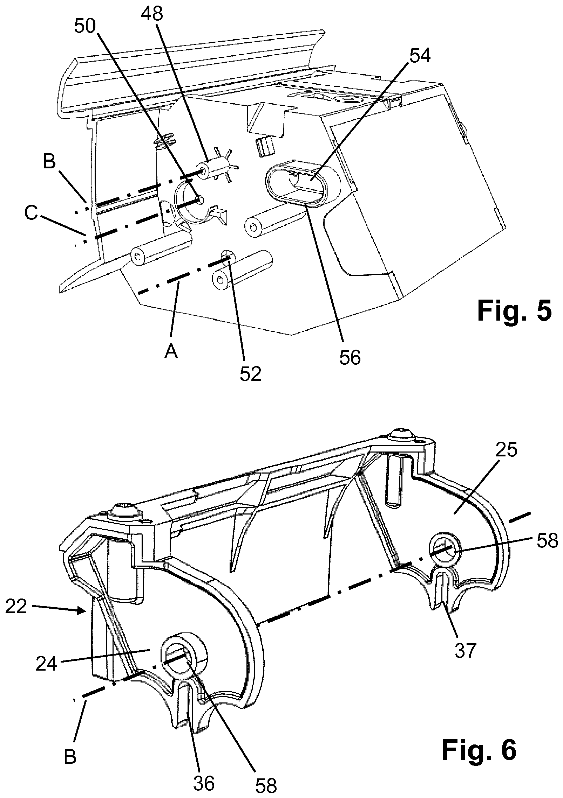

Fig. 5 zeigt eine perspektivische Darstellung von Komponenten der Anordnung von Fig. 1 und zeigt insbesondere die Lagerstellen und Rotationsachsen A, B und C des Zahnrads 30, des ersten Antriebsrads 28 sowie des ersten Sternradelementes 24 und des zweiten Sternradelementes 26. Zudem ist die Führung 54 dargestellt, die eine umgebende Führungswand 56 aufweist. Es wird darauf hingewiesen, dass obwohl nur eine Seitenwand der Aufnahme 15 dargestellt ist, die gegenüberliegende Seitenwand analog ausgebildet ist und entsprechende Komponenten aufweist, damit ein synchrones Verfahren der Ausströmeinheit 16 und Verschwenken der Verschlusseinheit 22 mit nur einer Antriebseinheit 29 durchgeführt werden kann.

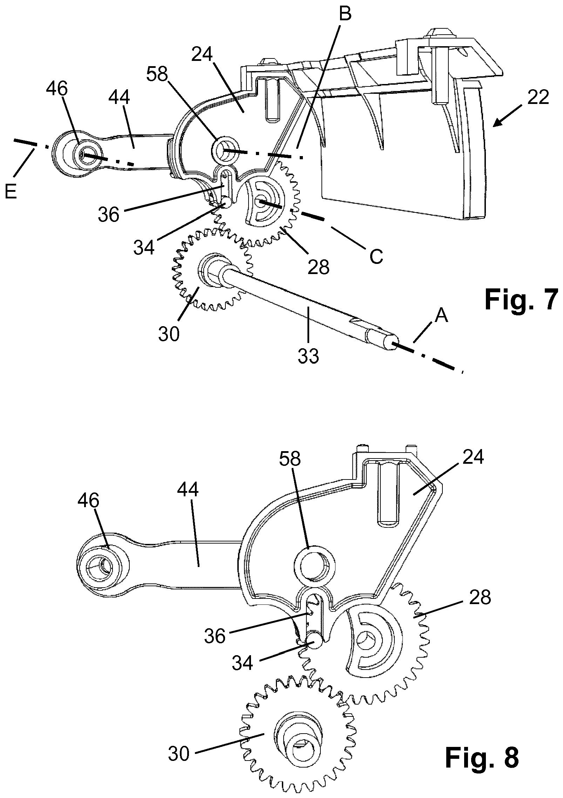

Über die Lageröffnung 52 ist die Welle 33 (siehe Fig. 7) drehbar gelagert und tritt aus der Lageröffnung 52 hervor. An der Welle 33 sind das Zahnrad 30 und das Ritzel 31 angeordnet. Die Welle 33 und damit das Zahnrad 30 sowie das Ritzel 31 sind um die Achse A drehbar. Das erste Antriebsrad 28 ist über eine Lageröffnung 50 um die Achse C drehbar gelagert. Das erste Sternradelement 24 und das zweite Sternradelement 26 sind auf dem Lager 48 um die Achse B drehbar gelagert.

In der Lageröffnung 50 kann ein Stift oder ähnliches aufgenommen sein, auf dem das erste Antriebsrad 28 gelagert ist. Alternativ dazu kann das erste Antriebsrad 28 einen Stift aufweisen, der in der Lageröffnung 50 drehbar gelagert ist. Die Welle 33 erstreckt sich durch die Aufnahme 15 hindurch und tritt an einer gegenüberliegenden Seitenwand der Aufnahme 15 aus einer der Lageröffnung 52 korrespondierenden Lageröffnung heraus, wobei ebenfalls mindestens ein Zahnrad angeordnet ist, welches die Drehbewegung auf ein weiteres erstes Antriebsrad bzw. ein zweites Antriebsrad überträgt.

Die Führung 54 weist eine umlaufende Führungswand 56 auf. In dieser Führung 54 ist ein Verbindungsabschnitt 46 des ersten Verbindungselementes 44 gelagert. Die Ausströmeinheit 16 ist drehbar mit dem Verbindungsabschnitt 46 verbunden. Wird das erste Verbindungselement 44 entlang der Führung 54 bewegt, erfolgt ein Verfahren der Ausströmeinheit 16.

Fig. 6 zeigt eine perspektivische Darstellung einer Verschlusseinheit 22 der Belüftungseinrichtung 10 von Fig. 1. Die Verschlusseinheit 22 besteht aus einer vorderen Klappe die an ihrer Vorderseite (in Fig. 6 nicht dargestellt) eine im Wesentlichen glatte Oberfläche aufweist.

Die Oberfläche an der Vorderseite ist in der Regel so ausgebildet, wie die Oberfläche des die Öffnung 11 umgebenden Bereichs des Verkleidungsteils 12. An der Klappe sind ein erstes Sternradelement 24 und ein erstes Sternradelement 25 angeordnet. Das erste Sternradelement 24 weist einen ersten Aufnahmeschlitz 36 und das zweite Sternradelement einen ersten Aufnahmeschlitz 37 auf. In die ersten Aufnahmeschlitze 36 und 37 kann ein erster Stift 34 des ersten Antriebsrads 28 und ein erster Stift eines weiteren Antriebsrads in entsprechender Weise eingreifen. Das erste Antriebsrad 28 und das weitere Antriebsrad weisen dabei jeweils einen ersten Stift 34 auf, der in die ersten Aufnahmeschlitze 36 und 37 eingreift. Das weitere Antriebsrad ist dabei analog zu der in den Fig. 4 und 5 gezeigten Anordnung mit weiteren Komponenten angeordnet, um ein synchrones Verfahren der Ausströmeinheit 16 und Verschwenken der Verschlusseinheit 22 zu erreichen.

Das erste Sternradelement 24 und das erste Sternradelement 25 weisen zudem jeweils eine Lageröffnung 58 auf. Durch die Lageröffnungen 58 verläuft die Rotationsachse B. Das erste Sternradelement 24 ist über die Lageröffnung 58 auf dem Lager 48 drehbar gelagert. Das erste Sternradelement 25 ist über die Lageröffnung 58 auf einem korrespondieren Lager auf der gegenüberliegenden Seite der Aufnahme 15 drehbar gelagert.

Fig. 7 zeigt eine perspektivische Darstellung von Komponenten der Belüftungseinrichtung 10. Fig. 7 zeigt das erste Verbindungselement 44, das erste Sternradelement 24, das erste Antriebsrad 28, das Zahnrad 30, die Klappe der Verschlusseinheit 22 sowie die Welle 33. Es sind mit Ausnahme des zweiten Sternradelements 26 die Komponenten dargestellt, die über die Lager an der Seitenwand der Aufnahme 15 angeordnet sind, wie in Fig. 5 dargestellt. In Fig. 7 sind ebenfalls die Drehachsen A, B, C eingezeichnet. Die Welle 33, welche das Zahnrad 30 mit einem gegenüberliegenden Zahnrad 30 auf der anderen Seite verbindet, ist um die Achse A drehbar. Die Welle 33 sowie die Zahnräder 30 werden über das Ritzel 31, das mit dem Elektromotor der Antriebseinheit 29 gekoppelt ist, in Rotation versetzt. Die Rotation des Zahnrads 30 wird auf das erste Antriebsrad 28 übertragen, welches um die Achse C verdreht wird. Entsprechend der Drehrichtung um die Achse C gelangt der erste Stift 34 in den ersten Aufnahmeschlitz 36 oder aus diesem heraus. Aufgrund der drehbaren Lagerung des ersten Sternradelements 24 um die Achse B erfolgt dabei ein Verschwenken der Verschlusseinheit 22 nach links oder rechts. Fig. 7 zeigt einen geschlossenen Zustand der Öffnung 11, wobei die Klappe der Verschlusseinheit 22 die gezeigte Stellung einnimmt. Um die Verschlusseinheit 22 in eine geöffnete Position zu verbringen, wird das Antriebsrad 28 um die Achse C im Uhrzeigersinn verdreht, wodurch der erste Stift 34 in dem ersten Aufnahmeschlitz 36 aufgenommen wird und dabei beim weiteren Verdrehen ein Verdrehen des ersten Sternradelementes 24 gegen den Uhrzeigersinn bewirkt. Hierdurch wird die Verschlusseinheit 22 nach links verschwenkt und die Öffnung 11 freigegeben.

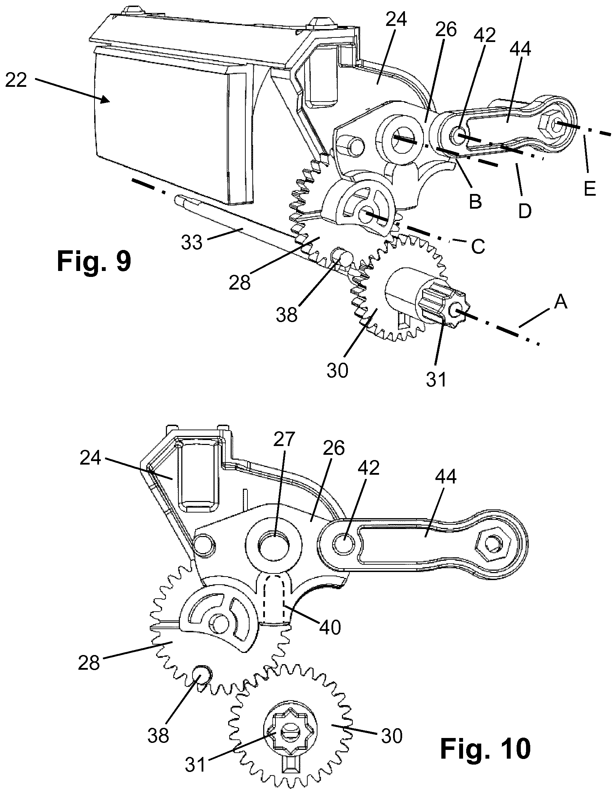

Nachdem die Verschlusseinheit 22 geöffnet worden ist oder bevor die Verschlusseinheit 22 den vollständig geöffneten Zustand eingenommen hat, greift der zweite Stift 38 in einen zweiten Aufnahmeschlitz 40 (siehe Fig. 9, 10) des zweiten Sternradelementes 26. Das weitere Verdrehen des ersten Antriebsrads 28 bewirkt dabei mit Blick auf Fig. 10 ein Verdrehen des zweiten Sternradelementes 26 im Uhrzeigersinn, wobei über die verdrehbare Lagerung des dritten Stifts 42 in einer Aufnahme des ersten Verbindungselements 44 eine Verlagerung des hinteren Abschnitts des ersten Verbindungselements 44 nach links erfolgt. Hierbei wird der Verbindungsabschnitt 46 ebenfalls nach links bewegt, was zu einem Verschieben der Ausströmeinheit 16 entlang der Führung 54 in Richtung der ersten Öffnung 11 führt.

Fig. 8 zeigt eine weitere perspektivische Darstellung des Zahnrads 30, des ersten Antriebsrads 28, des ersten Sternradelementes 24 und des ersten Verbindungselements 44.

Fig. 9 zeigt eine weitere perspektivische Darstellung von Komponenten der Belüftungseinrichtung 10, wobei insbesondere die Anordnung des zweiten Sternradelementes 26 dargestellt ist.

Fig. 10 zeigt eine ähnliche Darstellung, wobei nur das Zahnrad 30, das erste Antriebsrad 28, das erste Sternradelement 24, das zweite Sternradelement 26 und das erste Verbindungselement 44 dargestellt sind.

Nachdem über den ersten Stift 34 die Verschlusseinheit 22 mit Blick auf Fig. 10 nach rechts verschwenkt worden ist, und das erste Antriebsrad 28 weiter gegen den Uhrzeigersinn verdreht wird, greift der zweite Stift 38 in den schematisch eingezeichneten zweiten Aufnahmeschlitz 40. Bei einem weiteren Verdrehen erfolgt ein Verschwenken des zweiten Sternradelementes 26 im Uhrzeigersinn. Der dritte Stift 42 ist um die Achse D (Fig. 9) drehbar mit dem vorderen Abschnitt des ersten Verbindungselementes 44 verbunden. Der hintere Abschnitt des ersten Verbindungselementes 44 mit dem Verbindungsabschnitt 46 ist um die Achse E drehbar mit der Ausströmeinheit 16 verbunden. Aufgrund der geführten Lagerung des Verbindungsabschnitts 46 in der Führung 54 kann bei einer Verlagerung des ersten Verbindungselementes 44 die Ausströmeinheit 16 nur nach vorne bzw. bei Fig. 10 nach links und von einer vorderen in eine zurückgefahrene Position nach rechts erfolgen.

Nachdem die Verschlusseinheit 22 die Öffnung 11 freigeben hat und die Ausströmeinheit 16 nach vorne verfahren wurde, wird über die Ausströmeinheit 16 ein Luftstrom bereitgestellt. Um die Ausströmeinheit 16 zurückzufahren und die Verschlusseinheit 22 zu verschwenken, um dabei die Öffnung 11 zu verschließen, wird mit Blick auf Fig. 10 das Antriebsrad 28 über das Zahnrad 30 durch die Antriebseinheit 29 in entgegengesetzter Richtung verdreht. Dabei erfolgt ein Verdrehen des ersten Antriebsrads 28 im Uhrzeigersinn, wobei der zweite Stift 38 in den zweiten Aufnahmeschlitz 40 greift und eine Rotation des zweiten Sternradelementes 26 gegen den Uhrzeigersinn bewirkt. Dabei wird das erste Verbindungselement 44 wieder in die waagrechte Position verbracht, sodass die Ausströmeinheit 16 in ihren hinteren Lagerzustand überführt wird. Bei einem weiteren Verdrehen des ersten Antriebsrads 28 im Uhrzeigersinn erfolgt anschließend ein Eingreifen des ersten Stifts 34 in den ersten Aufnahmeschlitz 36, sodass das erste Sternradelement 24 gegen den Uhrzeigersinn verdreht wird und ein Zurückfahren der Verschlusseinheit 22 bewirkt (mit Blick auf Fig. 10).

Wie vorstehend beschrieben, kann durch eine Drehbewegung entweder im Uhrzeigersinn oder gegen den Uhrzeigersinn sowohl die Ausströmeinheit 16 verfahren als auch die Verschlusseinheit 22 geöffnet werden. In entsprechender Weise kann dabei in einer entgegengesetzten Drehrichtung die Ausströmeinheit 16 zurückgefahren und die Verschlusseinheit 22 geschlossen werden.

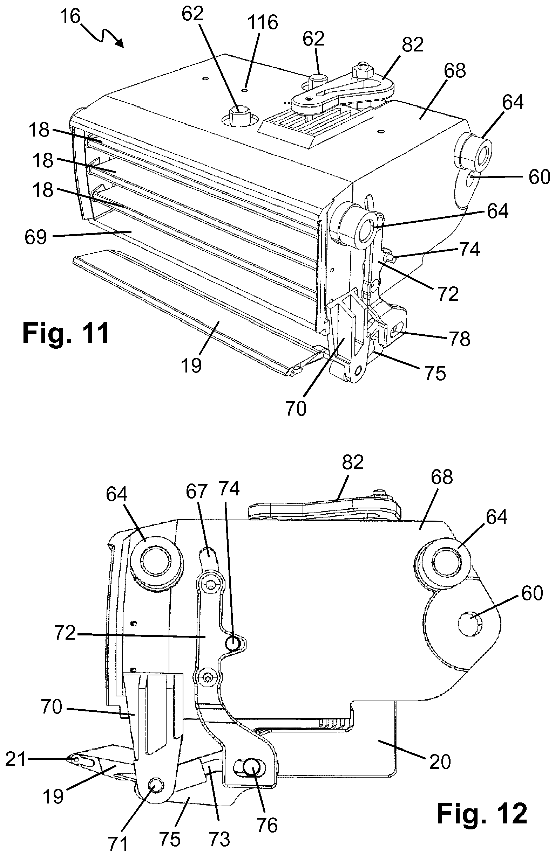

Fig. 11 zeigt eine perspektivische Darstellung einer Ausströmeinheit 16 und eines Luftleitelements 19 der Belüftungseinrichtung 10. Die Ausströmeinheit 16 weist ein Gehäuse 68 auf. An dem Gehäuse 68 sind Führungsansätze 62 und 64 angeordnet, die in entsprechenden Führungen in der Aufnahme 15 gelagert sind. Die Führungsansätze 62 und 64 stellen dabei sicher, dass die Ausströmeinheit 16 sicher und geradlinig verfahren wird. Ein Blockieren wird hierüber verhindert. In weiteren nicht dargestellten Ausführungsformen können die Führungsansätze 62 und 64 entsprechend ausgebildet bzw. vorgesehen sein, sodass auch ein nicht geradliniges Verfahren, beispielsweise in einer S-Kurve aus einer unteren in eine obere Position und zurück erfolgen kann.

Die Führungsansätze 62 und 64 können reibungsreduzierende Oberflächen oder Elemente aufweisen. Beispielsweise können die Führungsansätze 62 und 64 kugelgelagerte Rollen aufweisen, die in den entsprechenden Führungsnuten der Aufnahmen 15 geführt sind.

Das Gehäuse 68 weist Lageröffnungen 60 auf, die an gegenüberliegenden Seitenwänden angeordnet sind. Über die Lageröffnungen 60 wird ein vorderer Abschnitt der Verbindungsabschnitte 46 aufgenommen. Eine Verlagerung der Verbindungsabschnitte 46 über die ersten Verbindungselemente 44 bewirkt dabei ein Verschieben der Ausströmeinheit 16.

In dem Gehäuse 68 sind die Horizontallamellen 18 verschwenkbar gelagert und über eine Koppelstange 72 miteinander gekoppelt. Die Koppelstange 72 weist ferner eine Öffnung 78 auf, in der ein Zapfen 76 drehbar und verlagerbar geführt ist. Der Zapfen 76 ist Teil eines Koppelelementes 75, wobei das Koppelelement 75 verschwenkbar an einer Halterung 70 angeordnet ist. Die Halterung 70 ist fest mit dem Gehäuse 68 der Ausströmeinheit 16 verbunden. Das Koppelelement 75 weist einen Führungsstift 71 auf. Der Führungsstift 71 ist in der Öffnung der Halterung 70 aufgenommen. Das Koppelelement 75 weist ferner eine Führungskulisse 73 auf, in der ein Führungszapfen des Luftleitelementes 19 aufgenommen ist.

Fig. 12 zeigt eine Seitenansicht der Anordnung von Fig. 11. Das Luftleitelement 19 ist um einen Lagerzapfen 21 drehbar in dem Aufnahmeabschnitt der Aufnahme 15 der Belüftungseinrichtung 10 gelagert. Der Lagerzapfen 21 ist an der Vorderkante des Luftleitelements 19 angeordnet. Der Führungszapfen befindet sich in einem der Vorderkante gegenüberliegenden Bereich. Bei der Darstellung von Fig. 12 befindet sich der Führungszapfen dabei im Wesentlichen in einer ähnlichen Position wie der Führungsstift 71 und ist dahinter gelagert. Die Figuren zeigen insbesondere eine Anordnung der Belüftungseinrichtung 10, wobei die Ausströmeinheit 16 sich in einer zurückgefahrenen Position befindet. Dabei wurde das Luftleitelement 19 über den Führungszapfen und die Führungskulisse 73 in eine in Fig. 12 gezeigte Ausrichtung verschwenkt. Würde die Ausströmeinheit 16 nach links verfahren werden, so würde der Führungszapfen aufgrund der Lagerung des Luftleitelements 19 in der Aufnahme 15 entlang der Führungskulisse 73 gleiten und in einen hinteren Bereich gelangen, der beispielsweise sich auf Höhe des Zapfen 76 befindet. Ist der Führungszapfen in diesem Bereich der Führungskulisse 73 aufgenommen, nimmt das Luftleitelement 19 die gleiche Ausrichtung ein, wie die Horizontallamellen 18. Die Form der Führungskulisse 73 stellt dabei sicher, dass eine entsprechend für einen verschlossenen Zustand der Verschlusseinheit 22 gewünschte Ausrichtung des Luftleitelements 19 eingenommen werden kann. Die Führungskulisse 73 könnte auch anderweitig verlaufen bzw. ausgebildet sein, sodass auch andere Stellungen des Luftleitelements 19 bei einer verschlossenen Belüftungseinrichtung 10 automatisch eingenommen werden. Über die Koppelstange 72 ist das Luftleitelement 19 mit den horizontal verlaufenden Lamellen 18 verschwenkbar gekoppelt.

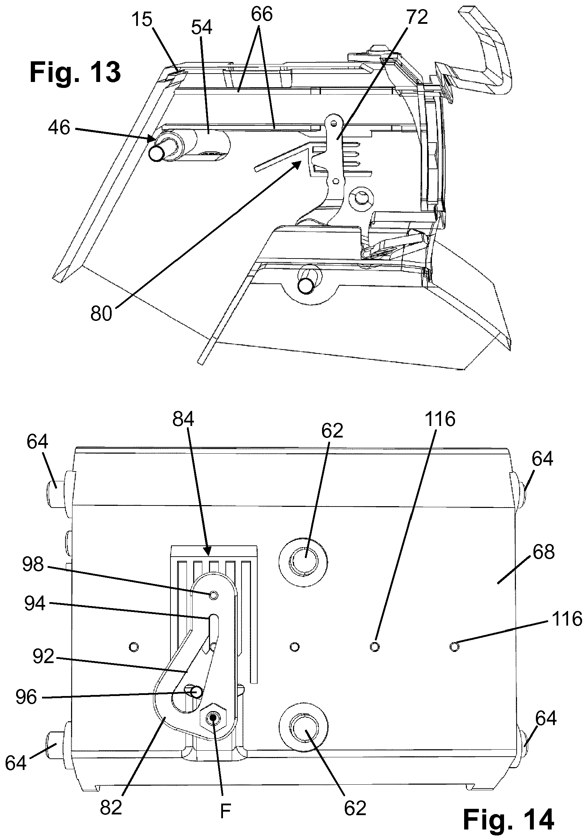

Die Koppelstange 72 weist einen Zapfen 74 auf, der in Führungsbahnen in einer dritten Führungsanordnung 80 in einem zurückgefahrenen Zustand der Ausströmeinheit 16 aufgenommen ist (siehe Fig. 13).

Fig. 12 zeigt ferner Vertikallamellen 20. Die Vertikallamellen 20 sind über Lager 116 (siehe Fig. 11) verschwenkbar in dem Gehäuse 68 der Ausströmeinheit 16 gelagert. Die Vertikallamellen 20 weisen einen Einschnitt auf, sodass sie zum Teil in einen Abschnitt der Ausströmeinheit 16, in welchem die Horizontallamellen 18 angeordnet sind, und auch in einen darunter liegenden Abschnitt der Aufnahme 15 für das Luftleitelement 19 ragen. Um eine bestimmte Trennung der Luftströme über die erste Öffnung 11 und die zweite Öffnung 13 bereitzustellen, weist das Gehäuse 68 der Ausströmeinheit 16 einen Boden 69 auf, der sich wie in Fig. 12 dargestellt, über den Einschnitt der Vertikallamellen 20 erstreckt.

Fig. 13 zeigt eine schematische Schnittansicht von Komponenten der Belüftungseinrichtung 10 und eines Teils eines Verkleidungsteils 12 eines Armaturenbretts von Fig. 1.

Fig. 13 zeigt die Aufnahme 15 mit Führungsleisten 66 zwischen denen die Ausströmeinheit 16 über die Führungssätze 64 verschiebbar gelagert ist. Ferner ist die Führung 54 dargestellt, in welcher der Verbindungsabschnitt 46 verschiebbar gelagert ist. Der Verbindungsabschnitt 46 ist so ausgebildet, dass ein hinterer, dem ersten Verbindungselement 44 zugewandter Teil einen größeren Durchmesser aufweist, der im Wesentlichen der Höhe der Führung 54 entspricht. Der vordere rotationssymmetrisch ausgebildete Abschnitt des Verbindungsabschnitts 46 weist einen Durchmesser auf, der im Wesentlichen dem Durchmesser der Lageröffnung 60 entspricht.

Fig. 13 zeigt ferner die Koppelstange 72 und die dritte Führungsanordnung 80 mit den Führungsbahnen. Bei der in Fig. 13 dargestellten Ansicht befindet sich der Zapfen 74 in der mittleren Führungsbahn der drei Führungsbahnen. Wie sich aus der Darstellung von Fig. 13 weiter ergibt, befindet sich der Zapfen 74 in einer vorgefahrenen Position der Ausströmeinheit 16 nicht mehr innerhalb der dritten Führungsanordnung 80, wobei dann ein beliebiges Verschwenken der Horizontallamellen 18 erfolgen kann.

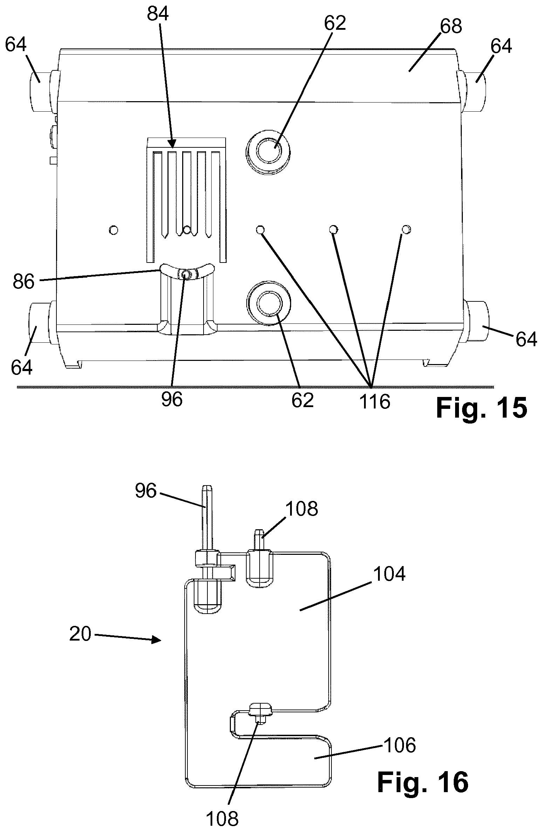

Fig. 14 zeigt eine schematische Draufsicht auf eine Ausströmeinheit 16 der Belüftungseinrichtung von Fig. 1. Das Gehäuse 68 der Ausströmeinheit 16 weist eine vierte Führungsanordnung 84 mit einer Vielzahl von Führungsbahnen auf. Zudem weist das Gehäuse 68 auf seiner Oberseite eine erste Führungsöffnung 86 auf (siehe Fig. 15). Die erste Führungsöffnung 86 ist gebogen ausgeführt, sodass diese dem Weg eines zweiten Steuerstifts 96 beim Verschwenken der Vertikallamellen 20 entspricht. Ein Führungselement 82 ist um eine Achse F drehbar mit der Aufnahme 15 verbunden. Das Führungselement 82 weist an einem vorderen Ende einen ersten Steuerstift 98 auf, welcher in Fig. 14 in einer der Führungsbahnen der vierten Führungsanordnung 84 aufgenommen ist. Zudem weist das Führungselement 82 eine zweite Führungskulisse 92 auf. Die zweite Führungskulisse 92 läuft an einem vorderen Abschnitt 94 so zusammen, dass der zweite Steuerstift 96 eine bestimmte Position einnehmen muss.

Fig. 15 zeigt eine weitere schematische Draufsicht auf eine Ausströmeinheit 16 der Belüftungseinrichtung 10 von Fig. 1. In Fig. 15 ist die erste Führungsöffnung 86 dargestellt, über welche der zweite Steuerstift 96 herausragt. Der zweite Steuerstift 96 erstreckt sich weiter durch eine erste Führungskulisse 88 der Aufnahme 15 und durch eine zweite Führungskulisse 92 des Führungselementes 82.

Die vierte Führungsanordnung 84 weist in der beispielhaften Ausführung fünf Führungsbahnen auf. In diesen Führungsbahnen der vierten Führungsanordnung 84 ist der erste Steuerstift 98 des Führungselementes 82 aufgenommen, wenn sich die Ausströmeinheit 16 in einer zurückgefahrenen Position befindet und in diese verbracht wird. Dadurch wird die Ausrichtung der Vertikallamellen 20 gespeichert. Der in dem Lager 116 der vierten Führungsanordnung 84 zugeordnete Lagerzapfen 108 einer Vertikallamelle 20, die in diesem Bereich angeordnet ist, ragt dabei nicht in die Führungsanordnung 84.

Fig. 16 zeigt eine schematische Darstellung einer Vertikallamelle 20 der Ausströmeinheit 16 der Belüftungseinrichtung 10 von Fig. 1. Diese Vertikallamelle 20 ist über die Lagerzapfen 108 in dem Gehäuse 68 der Ausströmeinheit 16 verdrehbar angeordnet. Dabei ist der Lagerzapfen 108 an der Oberseite so ausgebildet, dass er in dem Lager 116 drehbar aufgenommen ist, jedoch das Lager 116 nach oben hin nicht übersteht. Die Vertikallamelle 20 weist einen Abschnitt 104 und einen Abschnitt 106 auf. Der Abschnitt 104 und der Abschnitt 106 sind über einen Einschnitt geteilt. Der Abschnitt 104 weist an seiner Unterseite einen Lagerzapfen 108 auf, der in einem Lager in dem Boden 69 des Gehäuses 68 der Ausströmeinheit 16 drehbar aufgenommen ist. Der Abschnitt 104 befindet sich innerhalb des Gehäuses 68 und der Abschnitt 106 befindet sich unterhalb des Bodens 69 im Aufnahmeabschnitt für das Luftleitelement 19. Dadurch wird ein Luftstrom, der die erste Öffnung 11 und die zweite Öffnung 13 passiert, in gleicher Weise ausgerichtet.

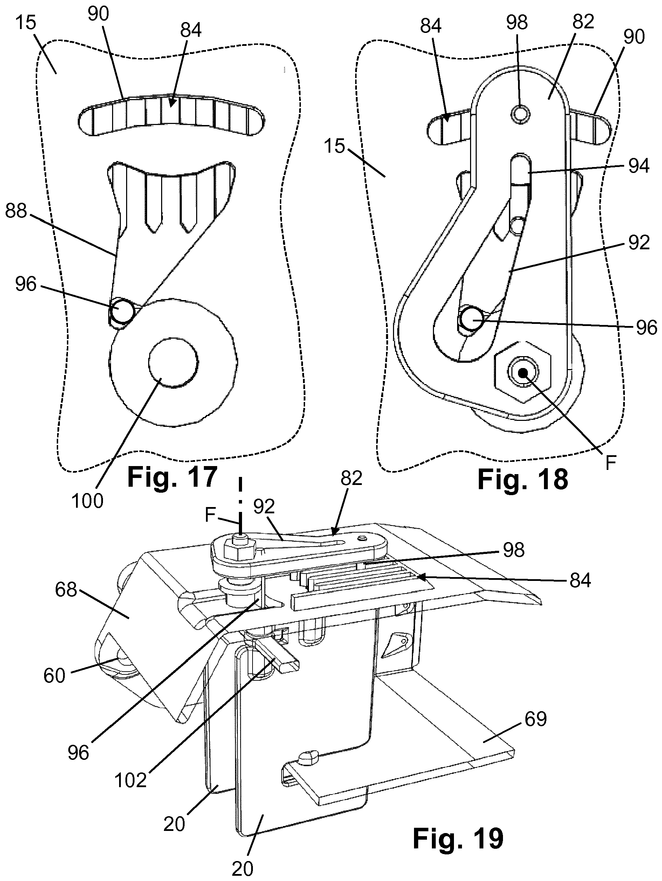

Befindet sich die Ausströmeinheit 16 in einer zurückgefahrenen Position, so nehmen die Vertikallamellen 20 eine über die erste Führungskulisse 88 definierte Ausrichtung ein. Beispielsweise werden die Lamellen 20, wie in Fig. 17 dargestellt, derart verschwenkt, dass ein Luftstrom zu einer Seitenscheibe hin gerichtet ist. Dabei zeigt Fig. 17 eine vergrößerte Darstellung eines Bereichs mit einer vierten Führungsanordnung 84 und Fig. 18 eine vergrößerte Darstellung eines Bereichs mit einer vierten Führungsanordnung 84 und einem Führungselement 82 der Belüftungseinrichtung 10.

In Fig. 17 sind die erste Führungskulisse 88 und die zweite Führungsöffnung 90 dargestellt. Zudem ist die Lageröffnung 100 dargestellt, über welche das Führungselement 82 um die Achse F drehbar gelagert ist. Aufgrund der Ausbildung der ersten Führungskulisse 88 wird der zweite Steuerstift 96 der Lamelle 20 in einer zurückgefahrenen Position der Ausströmeinheit 16 nach links verschwenkt, sodass die Lamellen eine schräge Ausrichtung einnehmen, in der mit Blick auf Fig. 17 der Luftstrom nach rechts abgelenkt wird.

Fig. 18 zeigt dabei einen Zustand, wobei die neutrale Ausrichtung der Lamellen 20 gespeichert ist. Die neutrale Ausrichtung 20 bedeutet, dass die Lamellen nicht verschwenkt und im Wesentlichen so ausgerichtet sind, wie in Fig. 19 dargestellt. Hierzu ist der erste Steuerstift 98 innerhalb der Führungsanordnung 84 in einer mittleren Führungsbahn aufgenommen. In der zurückgefahrenen Position der Ausströmeinheit 16 befindet sich jedoch der zweite Steuerstift 96 im unteren Bereich der ersten Führungskulisse 88, sodass die Lamellen 20 verschwenkt sind. Wird die Ausströmeinheit 16 wieder nach vorne verfahren, erfolgt automatisch eine Verlagerung des zweiten Steuerstifts 96 innerhalb der zweiten Führungskulisse 92 in den Abschnitt 94. Wie der Darstellung von Fig. 18 zu entnehmen ist, befindet sich dann der Steuerstift 96 auf einer gedachten Linie durch den ersten Steuerstift 98 und die Achse F.

Diese Anordnung ermöglicht es, die Stellung der Vertikallamellen 20 vor dem Zurückfahren der Ausströmeinheit 16 zu speichern und die Lamellen 20 in einer zurückgefahrenen Position in eine über die Ausbildung der ersten Führungskulisse 88 definierte Ausrichtung zu verschwenken. Wird die Ausströmeinheit 16 wieder zurück in ihre vorgefahrene Position verbracht, gleitet der zweite Steuerstift 96 entlang der Führungskulissen 88 und 92 in den Abschnitt 94 und bewirkt ein Verschwenken der Lamellen 20 entsprechend der vorher eingestellten Ausrichtung.

Befindet sich die Ausströmeinheit 16 in ihrer vorgefahrenen Position, befindet sich der erste Steuerstift 98 nicht im Bereich der Führungsbahnen der vierten Führungsanordnung 84, da das Führungselement 82 fest aber um die Achse F drehbar mit der Aufnahme 15 verbunden ist. Dann können die Vertikallamellen 20 beliebig verschwenkt werden, da der erste Steuerstift 98 nicht mehr in der vierten Führungsanordnung 84 aufgenommen ist. Wird die Ausströmeinheit 16 zurückgefahren, greift der erste Steuerstift 98 in eine der verschiedenen Führungsbahnen der vierten Führungsanordnung 84 ein. Das Führungselement 82 kann dann beispielsweise um die Achse F nach links oder rechts verschwenkt werden. Entsprechend zeigt der Abschnitt 94 dann in Richtung der entsprechenden Führungsbahn der Führungsanordnung 84. Der erste Steuerstift 98 ist in einer dieser Führungsbahnen dann aufgenommen, wobei der zweite Steuerstift 96 beim Zurückfahren der Ausströmeinheit 16 durch die Ausbildung der ersten Führungskulisse 88 stets in den unteren Abschnitt gelangt, wie er in Fig. 17 dargestellt ist. In dieser Stellung werden die Lamellen 20 wieder entsprechend der vorher festgelegten Ausrichtung verschwenkt. Wird die Ausströmeinheit 16 wieder nach vorne verfahren, gleitet der zweite Steuerstift 96 entlang der zweiten Führungskulisse 92 in den Abschnitt 94, wobei die vorher eingenommene Stellung der Vertikallamellen 20 eingenommen wird.

Fig. 19 zeigt eine schematische Schnittansicht der Ausströmeinheit 16 der Belüftungseinrichtung 10. Fig. 19 zeigt die Anordnung der Vertikallamellen 20 an dem Boden 69 des Gehäuses 68, wobei der Abschnitt 104 sich innerhalb des Gehäuses 68 befindet und der Abschnitt 106 unterhalb des Gehäuses 68 angeordnet ist.

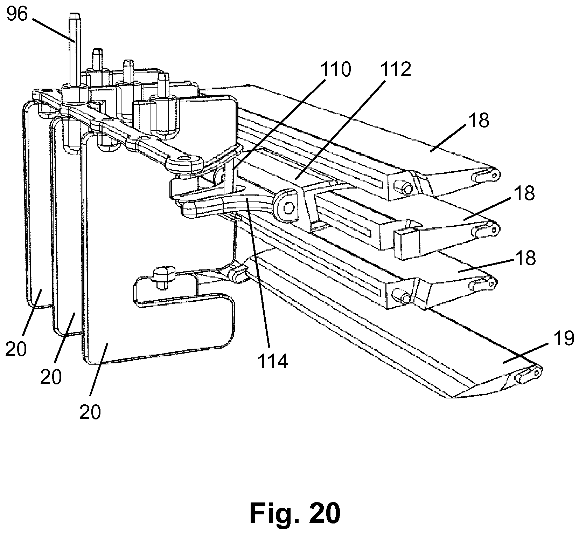

Fig. 20 zeigt eine perspektivische Darstellung von Vertikallamellen 20 und Horizontallamellen 18 der Ausströmeinheit 16 der Belüftungseinrichtung 10. Die Vertikallamellen 20 sind über eine Koppelstange 102 miteinander verbunden, sodass ein Verschwenken einer der Lamellen 20 stets ein synchrones Verschwenken der anderen Vertikallamellen 20 bewirkt. An einer Horizontallamelle 18, welche als Steuerlamelle ausgebildet ist, ist ein Bedienelement 112 angeordnet. Das Bedienelement 112 kann entlang dieser Steuerlamelle 18 verschoben werden. Das Bedienelement 112 weist eine Gabel 114 auf, die eine Steuerstange 110 einer Vertikallamelle 20 umgreift. Wird das Bedienelement 112 entlang der Steuerlamelle 18 verschoben, verschwenkt die entsprechende Vertikallamelle 20 und über die Koppelstange 102 auch die anderen Vertikallamellen 20. Die Gabel 114 ist verschwenkbar zu dem Bedienelement 112 angeordnet, sodass auch in einer verschwenkten Ausrichtung der Horizontallamellen 18 ein Verstellen der Vertikallamellen 20 möglich ist.

Über den zweiten Steuerstift 96 erfolgt dann beim Zurückfahren und Vorfahren der Ausströmeinheit 16 ein Einnehmen einer vorher eingestellten Position der Vertikallamellen 20, wenn die Ausströmeinheit 16 nach vorne gefahren wird, oder das Einnehmen einer durch die erste Führungskulisse 88 vorgegebenen Schrägstellung der Vertikallamellen 20, wenn die Ausströmeinheit 16 zurückgefahren wird.

Die hierin beschriebene Anordnung und Ausbildung der Komponenten für die Belüftungseinrichtung 10 einer beispielhaften Ausführungsform ermöglichen sowohl ein Verschwenken einer Verschlusseinheit 22 und ein Verfahren der Ausströmeinheit 16 durch Rotation der Antriebsräder in einer ersten Richtung und ein entsprechendes Zurückfahren und Schließen durch Rotation der Antriebsräder in einer zweiten Richtung. Zudem wird in einer verschlossenen Stellung ein definiert gerichteter Luftstrom über eine zweite Öffnung 13 bereitgestellt, die beispielsweise im Rahmen einer Defrosterfunktion zum Enteisen oder zum Freimachen einer beschlagenen Fahrzeugscheibe diese Scheibe belüftet. Hierzu nehmen die Vertikallamellen 20 und das Luftleitelement 19 eine definierte Stellung ein, wobei nach Verlassen der verschlossenen Position und dem Vorfahren der Ausströmeinheit 16 eine vorher eingestellte Ausrichtung der Horizontallamellen 18 und der Vertikallamellen 20 automatisch wieder eingenommen wird.

### Bezugszeichenliste

- 10: Belüftungseinrichtung
- 11: Öffnung
- 12: Verkleidungsteil
- 13: Öffnung
- 14: Leiste
- 15: Aufnahme
- 16: Ausströmeinheit
- 18: Horizontallamelle
- 19: Luftleitelement
- 20: Vertikallamelle
- 21: Lagerzapfen
- 22: Verschlusseinheit
- 24: erstes Sternradelement
- 25: erstes Sternradelement
- 26: zweites Sternradelement
- 27: Lageröffnung
- 28: erstes Antriebsrad
- 29: Antriebseinheit
- 30: Zahnrad
- 31: Ritzel
- 32: Anschluss
- 33: Welle
- 34: erster Stift
- 36: erster Aufnahmeschlitz
- 37: erster Aufnahmeschlitz
- 38: zweiter Stift
- 40: zweiter Aufnahmeschlitz
- 42: dritter Stift
- 44: erstes Verbindungselement
- 46: Verbindungsabschnitt
- 47: Welle
- 48: Lager
- 50: Lageröffnung
- 52: Lageröffnung
- 54: Führung
- 56: Führungswand
- 58: Lageröffnung
- 60: Lageröffnung
- 62: Führungsansatz
- 64: Führungsansatz
- 66: Führungsleiste
- 67: Öffnung
- 68: Gehäuse
- 69: Boden
- 70: Halterung
- 71: Führungsstift
- 72: Koppelstange
- 73: Führungskulisse
- 74: Zapfen
- 75: Koppelelement
- 76: Zapfen
- 78: Öffnung
- 80: dritte Führungsanordnung
- 82: Führungselement
- 84: vierte Führungsanordnung
- 86: erste Führungsöffnung
- 88: erste Führungskulisse
- 90: zweite Führungsöffnung
- 92: zweite Führungskulisse
- 94: Abschnitt
- 96: zweiter Steuerstift
- 98: erster Steuerstift
- 100: Lageröffnung
- 102: Koppelstange
- 104: Abschnitt
- 106: Abschnitt
- 108: Lagerzapfen
- 110: Steuerstange
- 112: Bedienelement
- 114: Gabel
- 116: Lager
- A: Achse
- B: Achse
- C: Achse
- D: Achse
- E: Achse
- F: Achse

## Patentansprüche

1. Belüftungseinrichtung, mindestens aufweisend eine Ausströmeinheit (16), die in einer Aufnahme (15) eines Verkleidungsteils (12) eines Kraftfahrzeugs verschiebbar gelagert ist, und eine Verschlusseinheit (22), die verschwenkbar an der Aufnahme (15) gelagert ist, wobei
- die Aufnahme (15) mindestens eine erste Führung aufweist, entlang der die Ausströmeinheit (16) verschiebbar gelagert ist, **dadurch gekennzeichnet, dass**
- an der Aufnahme (15) ein erstes Antriebsrad (28), ein erstes Sternradelement (24) und ein gegenüberliegendes zweites Sternradelement (26) eines ersten Malteserkreuz-Getriebes angeordnet sind,
- die Rotationsachse (C) des ersten Antriebsrads (28) beabstandet zu den Rotationsachsen (B) des ersten Sternradelements (24) und des zweiten Sternradelements (26) verläuft,
- das erste Antriebsrad (28) mit einer Antriebseinheit (29) gekoppelt ist,
- das erste Antriebsrad (28) an einer ersten Seite mindestens einen ersten Stift (34) und das erste Sternradelement (24) mindestens einen korrespondierenden ersten Aufnahmeschlitz (36) aufweisen,
- das erste Sternradelement (24) mit der Verschlusseinheit (22) gekoppelt und die Verschlusseinheit (22) über das erste Sternradelement (24) verschwenkbar ist,
- das erste Antriebsrad (28) an einer zweiten Seite mindestens einen zweiten Stift (38) und das zweite Sternradelement (26) mindestens einen korrespondierenden zweiten Aufnahmeschlitz (40) aufweisen,
- das zweite Sternradelement (26) mindestens einen dritten Stift (42) aufweist, der mit einem ersten Verbindungselement (44) drehbar gekoppelt ist,
- das erste Verbindungselement (44) einen Verbindungsabschnitt (46) aufweist, der mit der Ausströmeinheit (16) verdrehbar gekoppelt ist, und
- der Verbindungsabschnitt (46) in einer zweiten Führung (54) in der Aufnahme (15) verschiebbar ist.

2. Belüftungseinrichtung nach Anspruch 1, wobei
- an der Aufnahme (15) ein zweites Antriebsrad, ein erstes Sternradelement (25) und ein gegenüberliegendes zweites Sternradelement eines zweiten Malteserkreuz-Getriebes angeordnet sind,
- die Rotationsachse (C) des zweiten Antriebsrads beabstandet zu den Rotationsachsen (B) des ersten Sternradelements (25) und des zweiten Sternradelements verläuft,
- das zweite Antriebsrad mit einer Antriebseinheit (29) gekoppelt ist,
- das zweite Antriebsrad an einer ersten Seite mindestens einen ersten Stift und das erste Sternradelement (25) mindestens einen korrespondierenden ersten Aufnahmeschlitz (37) aufweisen,
- das erste Sternradelement (25) mit der Verschlusseinheit (22) gekoppelt und die Verschlusseinheit (22) über das erste Sternradelement (25) verschwenkbar ist,
- das zweite Antriebsrad an einer zweiten Seite mindestens einen zweiten Stift und das zweite Sternradelement mindestens einen korrespondierenden zweiten Aufnahmeschlitz aufweisen,
- das zweite Sternradelement mindestens einen dritten Stift aufweist, der mit einem zweiten Verbindungselement drehbar gekoppelt ist,
- das zweite Verbindungselement einen Verbindungsabschnitt aufweist, der mit der Ausströmeinheit (16) verdrehbar gekoppelt ist, und
- der Verbindungsabschnitt in einer zweiten Führung in der Aufnahme (15) verschiebbar ist.

3. Belüftungseinrichtung nach Anspruch 2, wobei das erste Antriebsrad (28) mit dem zweiten Antriebsrad gekoppelt ist.

4. Belüftungseinrichtung nach einem der Ansprüche 1 bis 3, wobei das erste Antriebsrad (28) und/oder das zweite Antriebsrad über ein Getriebe mit der Antriebseinheit (29) gekoppelt sind.

5. Belüftungseinrichtung nach einem der Ansprüche 1 bis 4, wobei die Aufnahme (15) in dem Verkleidungsteil (12) eine erste Öffnung (11) für die Ausströmeinheit (16) und mindestens eine zweite Öffnung (13) aufweist, die benachbart zur ersten Öffnung (11) angeordnet ist, und in einem der zweiten Öffnung (13) zugeordneten Aufnahmeabschnitt der Aufnahme (15) mindestens ein Luftleitelement (19) verschwenkbar gelagert ist.

6. Belüftungseinrichtung nach Anspruch 5, wobei die Ausströmeinheit (16) verschwenkbar in einem Gehäuse (68) der Ausströmeinheit (16) gelagerte erste Luftleitelemente und verschwenkbar in dem Gehäuse (68) gelagerte zweite Luftleitelemente aufweist, die orthogonal zu den ersten Luftleitelementen gelagert sind, und wobei das mindestens eine Luftleitelement (19) mit den ersten Luftleitelementen und/oder den zweiten Luftleitelementen gekoppelt ist.

7. Belüftungseinrichtung nach Anspruch 6, wobei die Aufnahme (15) eine dritte Führungsanordnung (80) aufweist, über welche mittels einer Koppeleinrichtung, die mit dem mindestens einen Luftleitelement (19) sowie den ersten Luftleitelementen und/oder den zweiten Luftleitelementen gekoppelt ist, die Ausrichtung der ersten Luftleitelemente und/oder der zweiten Luftleitelemente in einer zurückgefahrenen Position der Ausströmeinheit (16) speicherbar ist, wobei ein Steuerglied in der zurückgefahrenen Position der Ausströmeinheit (16) in der dritten Führungsanordnung (80) aufgenommen ist.

8. Belüftungseinrichtung nach Anspruch 5 oder 6, wobei
- das Gehäuse (68) eine vierte Führungsanordnung (84) und eine erste Führungsöffnung (86) aufweist,
- die Aufnahme (15) eine erste Führungskulisse (88) und eine zweite Führungsöffnung (90) aufweist,
- an der Aufnahme (15) ein Führungselement (82) drehbar gelagert ist, welches eine zweite Führungskulisse (92) und einen ersten Steuerstift (98) aufweist,
- ein erstes Luftleitelement oder ein zweites Luftleitelement einen zweiten Steuerstift (96) aufweisen, der über die erste Führungsöffnung (86) aus dem Gehäuse (68) hervorsteht und in der ersten Führungskulisse (88) und der zweiten Führungskulisse (92) geführt ist,
- der erste Steuerstift (98) in der zweiten Führungsöffnung (90) geführt ist und sich in Richtung des Gehäuses (68) erstreckt, und
- der erste Steuerstift (98) im zurückgefahrenen Zustand der Ausströmeinheit (16) in einer Führungsbahn der vierten Führungsanordnung (84) aufgenommen ist.

9. Belüftungseinrichtung nach einem der Ansprüche 1 bis 8, wobei die Rotationsachse des ersten Sternradelements (24; 25) und die Rotationsachse des zweiten Sternradelements (26) auf einer gemeinsamen Achse (B) liegen.

10. Belüftungseinrichtung nach einem der Ansprüche 1 bis 9, wobei der erste Stift (34) und der zweite Stift (38) des ersten Antriebsrads (28) und/oder des zweiten Antriebrads um deren Rotationsachse (C) in einem Winkel zwischen 90 Grad und 150 Grad versetzt zueinander angeordnet sind.

11. Belüftungseinrichtung nach einem der Ansprüche 1 bis 10, wobei die Antriebseinheit (28) einen Elektromotor aufweist.

## Claims

1. Ventilation device, at least comprising an outflow unit (16), which is displaceably mounted in a receptacle (15) of a cladding component (12) of a motor vehicle, and a closure unit (22), which is pivotably mounted at the receptacle (15), wherein
- the receptacle (15) has at least a first guide along which the outflow unit (16) is displaceably mounted,
**characterised in that**
- a first drive wheel (28), a first star wheel element (24) and an opposite, second star wheel element (26) of a first Maltese cross transmission are arranged at the receptacle (15),
- the axis (C) of rotation of the first drive wheel (28) extends at a spacing from the axes (B) of rotation of the first star wheel element (24) and the second star wheel element (26),
- the first drive wheel (28) is coupled with a drive unit (29),
- the first drive wheel (28) has a least one first pin (34) at a first side and the first star wheel element (24) has at least one corresponding first receiving slot (36),
- the first star wheel element (24) is coupled with the closure unit (22) and the closure unit (22) is pivotable by way of the first star wheel element (24),
- the first drive wheel (28) has at least one second pin (38) at a second side and the second star wheel element (26) has at least one corresponding second receiving slot (40),
- the second star wheel (26) has at least one third pin (42), which is rotatably coupled with a first connecting element (44),
- the first connecting element (44) has a connecting section (46) which is rotatably coupled with the outflow unit (16) and
- the connecting section (46) is displaceable in a second guide (54) in the receptacle (15).

2. Ventilation device according to claim 1, wherein
- a second drive wheel, a first star wheel element (25) and an opposite, second star wheel element of a second Maltese cross transmission are arranged at the receptacle (15),
- the axis (C) of rotation of the second drive wheel extends at a spacing from the axes (B) of the first star wheel element (25) and the second star wheel element,
- the second drive wheel is coupled with a drive unit (29),
- the second drive wheel has at least one first pin at a first side and the first star wheel element (25) has at least one corresponding first receiving slot (37),
- the first star wheel element (25) is coupled with the closure unit (22) and the closure unit (22) is pivotable by way of the first star wheel element (25),
- the second drive wheel has at least one second pin at a second side and the second star wheel has at least one corresponding second receiving slot,
- the second star wheel element has at least one third pin, which is rotatably coupled with a second connecting element,
- the second connecting element has a connecting section, which is rotatably coupled with the outflow unit (16), and
- the connecting section is displaceable in a second guide in the receptacle (15).

3. Ventilation device according to claim 2, wherein the first drive wheel (28) is coupled with the second drive wheel.

4. Ventilation device according to any one of claims 1 to 3, wherein the first drive wheel (28) and/or the second drive wheel is or are coupled with the drive unit (29) by way of a transmission.

5. Ventilation device according to any one of claims 1 to 4, wherein the receptacle (15) in the cladding component (12) has a first opening (11) for the outflow unit (16) and at least one second opening (13) arranged adjacent to the first opening (11), and at least one air guide element (19) is pivotably mounted in a receiving section, which is associated with the second opening (13), of the receptacle (15).

6. Ventilation device according to claim 5, wherein the outflow unit (16) comprises first air guide elements which are pivotably mounted in a housing (68) of the outflow unit (16) and second air guide elements which are pivotably mounted in the housing (68) and mounted to be orthogonal to the first air guide elements, and wherein the at least one air guide element (19) is coupled with the first air guide elements and/or the second air guide elements.

7. Ventilation device according to claim 6, wherein the receptacle (15) comprises a third guide arrangement (80), by way of which the alignment of the first air guide elements and/or the second air guide elements in a retracted position of the outflow unit (16) can be stored by means of a coupling device coupled with the at least one air guide element (19) as well as the first air guide elements and/or the second air guide elements, wherein a control element is received in the third guide arrangement (80) in the retracted position of the outflow unit (16).

8. Ventilation device according to claim 5 or 6, wherein
- the housing (68) has a fourth guide arrangement (84) and a first guide opening (86),
- the receptacle (15) has a first gate guide (88) and a second guide opening (90),
- a guide element (82) having a second gate guide (92) and a first control pin (98) is rotatably mounted at the receptacle (15),
- a first air guide element or a second air guide element has a second control pin (96) which projects out of the housing (86) via the first guide opening (86) and is guided in the first gate guide (88) and the second gate guide (92),
- the first control pin (98) is guided in the second guide opening (90) and extends in the direction of the housing (68) and
- the first control pin (98) is received in a guide track of the fourth guide arrangement (84) in the retracted state of the outflow unit (16).

9. Ventilation device according to any one of claims 1 to 8, wherein the axis of rotation of the first star wheel element (24; 25) and the axis of rotation of the second star wheel element (26) lie on a common axis (B).

10. Ventilation device according to any one of claims 1 to 9, wherein the first pin (34) and the second pin (38) of the first drive wheel (28) and/or the second drive wheel is or are arranged to be offset about the axis (C) of rotation thereof at an angle of between 90 degrees and 150 degrees relative to one another.

11. Ventilation device according to any one of claims 1 to 10, wherein the drive unit (28) comprises an electric motor.

## Revendications

1. Dispositif de ventilation, présentant au moins une unité d'évacuation (16), qui est montée de manière coulissante dans un logement (15) d'un élément d'habillage (12) d'un véhicule automobile, et une unité de fermeture (22), qui est montée de manière pivotante au niveau du logement (15), dans lequel
- le logement (15) présente au moins un premier guidage, le long duquel l'unité d'évacuation (16) est montée de manière coulissante,
**caractérisé en ce que**
- une première roue d'entraînement (28), un premier élément de roue en étoile (24) et un deuxième élément de roue en étoile opposé (26) d'une première transmission à croix de Malte sont agencés au niveau du logement (15),
- l'axe de rotation (C) de la première roue d'entraînement (28) s'étend à distance des axes de rotation (B) du premier élément de roue en étoile (24) et du deuxième élément de roue en étoile (26),
- la première roue d'entraînement (28) est couplée à une unité d'entraînement (29),
- la première roue d'entraînement (28) présente au moins une première tige (34) au niveau d'un premier côté et le premier élément de roue en étoile (24) présente au moins une première fente de réception (36) correspondante,
- le premier élément de roue en étoile (24) est couplé à l'unité de fermeture (22) et l'unité de fermeture (22) peut pivoter par le biais du premier élément de roue en étoile (24),
- la première roue d'entraînement (28) présente au moins une deuxième tige (38) au niveau d'un deuxième côté et le deuxième élément de roue en étoile (26) présente au moins une deuxième fente de réception (40) correspondante,
- le deuxième élément de roue en étoile (26) présente au moins une troisième tige (42), qui est couplée de manière rotative à un premier élément de liaison (44),
- le premier élément de liaison (44) présente une section de liaison (46), qui est couplée en rotation à l'unité d'évacuation (16), et
- la section de liaison (46) peut coulisser dans un deuxième guidage (54) dans le logement (15).

2. Dispositif de ventilation selon la revendication 1, dans lequel
- une deuxième roue d'entraînement, un premier élément de roue en étoile (25) et un deuxième élément de roue en étoile opposé d'une deuxième transmission à croix de Malte sont agencés au niveau du logement (15),
- l'axe de rotation (C) de la deuxième roue d'entraînement s'étend à distance des axes de rotation (B) du premier élément de roue en étoile (25) et du deuxième élément de roue en étoile,
- la deuxième roue d'entraînement est couplée à une unité d'entraînement (29),
- la deuxième roue d'entraînement présente au moins une première tige au niveau d'un premier côté et le premier élément de roue en étoile (25) présente au moins une première fente de réception (37) correspondante,
- le premier élément de roue en étoile (25) est couplé à l'unité de fermeture (22) et l'unité de fermeture (22) peut pivoter par le biais du premier élément de roue en étoile (25),
- la deuxième roue d'entraînement présente au moins une deuxième tige au niveau d'un deuxième côté et le deuxième élément de roue en étoile présente au moins une deuxième fente de réception correspondante,
- le deuxième élément de roue en étoile présente au moins une troisième tige, qui est couplée de manière rotative à un deuxième élément de liaison,
- le deuxième élément de liaison présente une section de liaison, qui est couplée en rotation à l'unité d'évacuation (16), et
- la section de liaison peut coulisser dans un deuxième guidage dans le logement (15).

3. Dispositif de ventilation selon la revendication 2, dans lequel la première roue d'entraînement (28) est couplée à la deuxième roue d'entraînement.

4. Dispositif de ventilation selon l'une quelconque des revendications 1 à 3, dans lequel la première roue d'entraînement (28) et/ou la deuxième roue d'entraînement sont couplées à l'unité d'entraînement (29) par le biais d'une transmission.

5. Dispositif de ventilation selon l'une quelconque des revendications 1 à 4, dans lequel le logement (15) dans l'élément d'habillage (12) présente une première ouverture (11) pour l'unité d'évacuation (16) et au moins une deuxième ouverture (13), qui est agencée de manière adjacente à la première ouverture (11), et au moins un élément de conduite d'air (19) est monté de manière pivotante dans une section de réception du logement (15) associée à la deuxième ouverture (13).

6. Dispositif de ventilation selon la revendication 5, dans lequel l'unité d'évacuation (16) présente des premiers éléments de conduite d'air montés de manière pivotante dans un boîtier (68) de l'unité d'évacuation (16) et des deuxièmes éléments de conduite d'air montés de manière pivotante dans le boîtier (68), qui sont montés orthogonalement aux premiers éléments de conduite d'air, et dans lequel l'au moins un élément de conduite d'air (19) est couplé aux premiers éléments de conduite d'air et/ou aux deuxièmes éléments de conduite d'air.

7. Dispositif de ventilation selon la revendication 6, dans lequel le logement (15) présente un troisième agencement de guidage (80), par le biais duquel l'orientation des premiers éléments de conduite d'air et/ou des deuxièmes éléments de conduite d'air dans une position rentrée de l'unité d'évacuation (16) peut être mémorisée au moyen d'un dispositif de couplage, qui est couplé à l'au moins un élément de conduite d'air (19) ainsi qu'aux premiers éléments de conduite d'air et/ou aux deuxièmes éléments de conduite d'air, dans lequel un organe de commande est reçu dans la position rentrée de l'unité d'évacuation (16) dans le troisième agencement de guidage (80).

8. Dispositif de ventilation selon la revendication 5 ou 6, dans lequel
- le boîtier (68) présente un quatrième agencement de guidage (84) et une première ouverture de guidage (86),
- le logement (15) présente une première coulisse de guidage (88) et une deuxième ouverture de guidage (90),
- un élément de guidage (82), lequel présente une deuxième coulisse de guidage (92) et une première tige de commande (98), est monté de manière rotative au niveau du logement (15),
- un premier élément de conduite d'air ou un deuxième élément de conduite d'air présentant une deuxième tige de commande (96), qui fait saillie du boîtier (68) par le biais de la première ouverture de guidage (86) et est guidée dans la première coulisse de guidage (88) et la deuxième coulisse de guidage (92),
- la première tige de commande (98) est guidée dans la deuxième ouverture de guidage (90) et se déploie en direction du boîtier (68), et
- la première tige de commande (98) est reçue à l'état rentré de l'unité d'évacuation (16) dans une voie de guidage du quatrième agencement de guidage (84).

9. Dispositif de ventilation selon l'une quelconque des revendications 1 à 8, dans lequel l'axe de rotation du premier élément de roue en étoile (24 ; 25) et l'axe de rotation du deuxième élément de roue en étoile (26) se trouvent sur un axe commun (B).

10. Dispositif de ventilation selon l'une quelconque des revendications 1 à 9, dans lequel la première tige (34) et la deuxième tige (38) de la première roue d'entraînement (28) et/ou de la deuxième roue d'entraînement sont agencées de manière décalée l'une par rapport à l'autre autour de leur axe de rotation (C) selon un angle entre 90 degrés et 150 degrés.

11. Dispositif de ventilation selon l'une quelconque des revendications 1 à 10, dans lequel l'unité d'entraînement (28) présente un moteur électrique.
